(19) Europäisches Patentamt / European Patent Office / Office européen des brevets

(11) **EP 2 493 176 B1**

(12) **EUROPEAN PATENT SPECIFICATION**

(45) Date of publication and mention
of the grant of the patent:
**09.08.2017  Bulletin 2017/32**

(51) Int Cl.:
*H04N 5/32* *(2006.01)*     *H04N 5/367* *(2011.01)*

(21) Application number: **12156407.4**

(22) Date of filing: **21.02.2012**

(54) **Radiographic image capturing system and radiographic image capturing device**

Röntgenbilderfassungssystem und Röntgenbilderfassungsvorrichtung

Appareil de capture d'images radiographiques et système de capture d'images radiographiques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2011  JP 2011041081**

(43) Date of publication of application:
**29.08.2012  Bulletin 2012/35**

(73) Proprietor: **Konica Minolta Medical & Graphic, Inc.
Tokyo 191-8511 (JP)**

(72) Inventor: **Amitani, Kouji
Tokyo, Tokyo 191-8511 (JP)**

(74) Representative: **Alton, Andrew
Urquhart-Dykes & Lord LLP
Arena Point
Merrion Way
Leeds LS2 8PA (GB)**

(56) References cited:
**WO-A1-03/100459     US-B1- 6 307 915**

**Description**

**TECHNICAL FIELD**

The present invention relates to a radiographic image capturing system and radiographic image capturing device, particular to a radiographic image capturing system and radiographic image capturing device wherein the radiographic image capturing device itself detects irradiation and captures a radiographic image.

**BACKGROUND TECHNOLOGY**

There has been development of various types of radiographic image capturing devices including a so-called direct type radiographic image capturing device wherein electric charge is generated by a detection element in response to the dosage of applied radiation such as X-ray, and is converted into the electric signal, and a so-called indirect type radiographic image capturing device wherein, after the applied radiation has been converted into electromagnetic waves of another wavelength such as visible light by a scintillator, electric charge is generated by a photoelectric conversion element such as a photodiode in response to the energy of the electromagnetic wave converted and applied, and is converted into the electric signal (i.e., image data). In the present invention, the detection element of the direct type radiographic image capturing device and the photoelectric conversion element of the indirect type radiographic image capturing device will be collectively called a radiation detection element.

The radiographic image capturing device of this type has been known under the name of a FPD (Flat Panel Detector). In the conventional art, this device has been designed as a so-called special-purpose type device integrally formed with a support base (or Bucky's radiographic device) (for example, Unexamined Japanese Patent Application Publication No. Hei 9 (1997)-73144). In recent years, a portable radiographic image capturing device wherein a radiation detection element and others are accommodated in a housing to provide portability has been developed and put into practical use (for example, Unexamined Japanese Patent Application Publication No. 2006-058124 and Unexamined Japanese Patent Application Publication No. Hei 6 (1994)-342099).

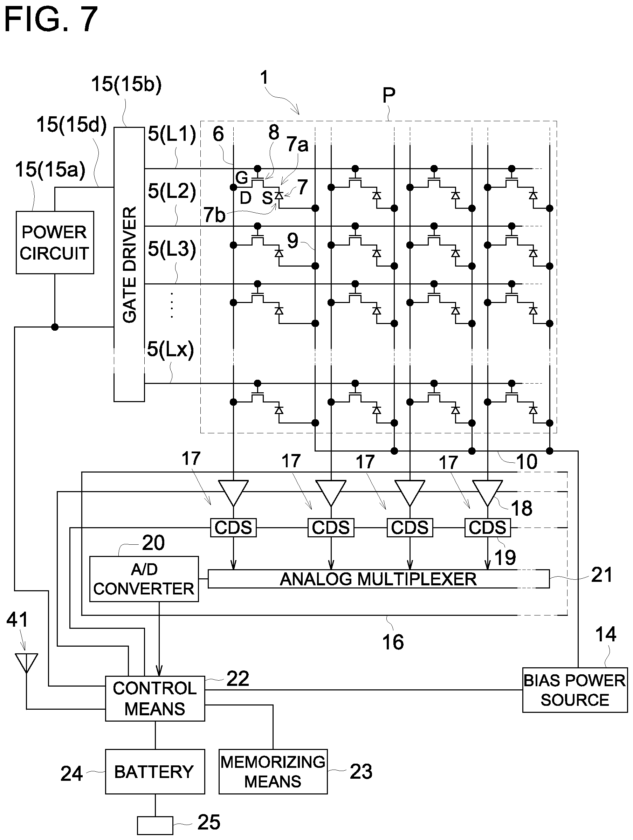

In such a radiographic image capturing device, for example, a plurality of radiation detection elements 7 are normally arranged in a two-dimensional array (matrix) on a detection portion P, as shown in Fig. 7 (to be described later). Each radiation detection element 7 is connected with a switching means formed of a thin film transistor (hereinafter referred to as "TFT") 8.

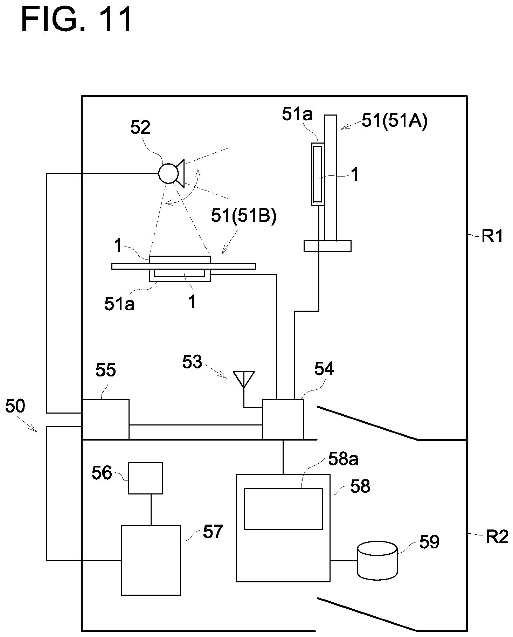

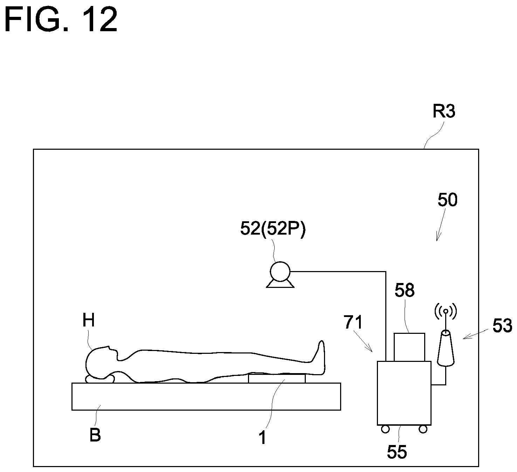

In normal radiographic image capturing mode, radiation is applied to the radiographic image capturing device from the radiation generator 52 (Figs. 11 and 12 to be described later) of an irradiation device 55 through a prescribed radiographic position (i.e., check front and lumbar spine side) of the subject's body.

In this case, off-voltage is applied to each of the lines L1 through Lx of the scanning line 5 from the gate driver 15b of the scanning driving means 15 of the radiographic image capturing device so that all TFT's 8 are turned off. Under this condition, radiation is applied. Then electric charges generated inside each radiation detection element 7 by irradiation are accumulated correctly inside each radiation detection element 7.

Subsequent to radiographic image capturing operation, on-voltages are sequentially applied to the lines L1 through Lx of the scanning line 5 from the gate driver 15b, and TFT's 8 are sequentially turned on. The electric charges generated inside each radiation detection element 7 by irradiation and accumulated therein are sequentially discharged to signal lines 6, and are read out as image data D by each reading circuit 17.

As described above, to ensure correct radiographic image capturing, when the radiographic image capturing device is irradiated, off-voltage must be applied properly to the lines L1 through Lx of the scanning line 5 from the gate driver 15b so that TFT's 8 as switching means are turned off.

In many of the conventional special-purpose type radiographic image capturing devices, for example, an interface is formed with an irradiation device to exchange signals and others. After it has been confirmed that the radiographic image capturing device has applied off-voltage to the lines L1 through Lx of the scanning line 5 and electric charges have been accumulated, the radiographic image capturing device allows the radiation to be applied from the radiation source.

However, for example, when the radiographic image capturing device has been made by a manufacturer different from that of the irradiation device, interface cannot be easily formed between the two or cannot be formed at all in some cases.

As described above, when interface cannot be formed between the radiographic image capturing device and irradiation device, there is no knowing when radiation was applied from the radiation source if viewed from the radiographic image capturing device. This requires the radiographic image capturing device to detect irradiation from a radiation source for itself.

In recent years, there has been development of various types of radiographic image capturing devices capable of detecting the irradiation without depending on the interface between the radiographic image capturing device and irradiation device.

US 6,307,915 describes a method of triggering a solid state X-ray image captruing device. A number of randomly distributed pixels in the solid state X-ray image capturing device designated reference pixels. The distribution of reference pixels may be either totally random or in a limited number of rows or columns. The reference pixels may include predetermined pixels or pixel like elements located in rows or columns distributed in at least two different locations on the sensor. To determine commencement of exposure the reference pixels are continuously monitored for signal. If the signal level in a predetermined minimum number of pixels exceeds the predetermined threshold, an image capture sequence starts. Otherwise, the entire image sensor is cleared and the signal monitoring continues. The threshold level is set to prevent accidental triggering by dark current at all operating temperatures of interest. Image readout is either initiated after waiting a fixed amount of time or by monitoring the change in the accumulated signal at the reference pixels. If the signal no longer changes then it is determined that the X-ray pulse has terminated and readout can be initiated

WO 03/100459 describes a solid state X-ray detector array for imaging a meausring the dose of X-rays. The X-ray detector apparatus has an array of pixels arranged into a plurality of sub-arrays. The pixels in each sub-array share a common output. The detector is operable in two modes. In a dose sensing mode, a switching arrangement is turned off and charge flow in response to incident radiation is partially coupled through an off-capacitance of the switching arrangement to the output. In a read out mode, the switching arrangement is turned on to allow charge to flow between the charge storage element and the output for measurement as a detection signal. The switching arrangement is turned on by first and second control signals to enable a single pixel within the sub-array to be selected. Thus, the resolution of normal read out is per-pixel whereas the resolution of dose sensing is per-sub-array

In the inventions disclosed in the Specification of the U.S. Patent No. 7211803 and Unexamined Japanese Patent Application Publication No. 2009-219538, when electric charges are generated inside radiation detection elements 7 by the start of irradiation of the radiographic image capturing device, electric charges flow through the bias line 9 (Fig. 7 to be described later) connected to the radiation detection elements 7 from the radiation detection elements 7 so that there is an increase in the current flowing through the bias line 9. This phenomenon is utilized in such a way that the value of the current running through the bias line 9 is detected by a current detecting means installed in the bias line 9. The start of irradiation is detected based on this current value, according to the proposed technique.

According to the study by the present inventors, however, in the aforementioned technique, the bias line 9 is connected to the electrode of the each radiation detection element 7, and the noise generated by the current detecting means is transmitted to the radiation detection elements 7 through the bias line 9. This is superimposed as noise to the image data D read out of the radiation detection element 7 in some cases. This raises a problem that cannot be easily solved, as clarified by the study of the present inventors.

In view of the problems described above, it is an object of the present invention to provide a radiographic image capturing system and radiographic image capturing device wherein irradiation can be detected by the radiographic image capturing device itself and a radiographic image is produced by properly correcting the line defect having occurred on the image data D.

The present inventors have made various researches on techniques of detecting irradiation by the radiographic image capturing device itself, and have succeeded in finding out some methods capable of ensuring accurate detection of irradiation by the radiographic image capturing device itself

A first aspect of the invention provides a radiation image capturing system, comprising: a radiation image capturing apparatus comprising: a detecting section provided with: a plurality of scanning lines and a plurality of signal lines arranged so as to cross each other; and a plurality of radiation detection elements arranged two-dimensionally in regions each partitioned by the plurality of scanning lines and the plurality of signal lines; a scanning drive unit which sequentially applies on-voltage by switching the scanning lines to each of the scanning lines which applies the on-voltage; switching means each connected to respective ones of the scanning lines so as to discharge electric charge accumulated in respective ones of the radiation detection elements to respective ones of the signal lines when the on-voltage is applied; a reading circuit for converting the electric charge discharged from the radiation detection elements into image data and reading out the image data; and a control device for controlling at least the scanning drive unit and the reading circuit to read out the image data from the radiation detection elements, wherein the control device is configured to repeatedly read out leak data by converting the electric charge having leaked through the switching means from the radiation detection elements into leak data by allowing the reading circuit to perform a cyclic reading operation while each of the switching means is turned off by allowing the scanning drive unit to apply off-voltage to all the scanning lines, and further configured to detect that irradiation has started when a value of any one of the leak data calculated using one of a plurality of calculation methods exceeds a corresponding set threshold value among a plurality of threshold values each of which is set for each of the respective plurality of calculation methods, prior to radiation image capturing operation, and wherein the plurality of calculation methods comprise calculating the average value for a signal line, calculating the difference between an average value and a moving average value for a signal line, calculating the difference between the maximum value and the minimum value of the difference between an average value and a moving average value for a signal line and calculating the accumulated value of the difference between an average value and a moving average value for a signal line; a communication unit for exchanging signals with an external device; and an image processing apparatus for generating a radiation image based on the image data sent from the radiation image capturing apparatus, wherein the control device is further configured to send information of the calculation method used for the calculation of the value of the leak data by which the start of irradiation was detected and wherein the image processing apparatus identifies a range of the image data containing a defect based on the information of the calculation method sent from the radiation image capturing apparatus, and repairs the image data in the identified range with a recovery method corresponding to the calculation method.

A second aspect of the invention provides a radiation image capturing system, comprising: a radiation image capturing apparatus including: a detecting section provided with: a plurality of scanning lines and a plurality of signal lines arranged so as to cross each other; and a plurality of radiation detection elements arranged two-dimensionally in regions each partitioned by the plurality of scanning lines and the plurality of signal lines; a scanning drive unit which sequentially applies on-voltage by switching the scanning lines to each of the scanning lines which applies the on-voltage; switching means each connected to respective ones of the scanning lines so as to discharge electric charge accumulated in respective ones of the radiation detection elements to respective ones of the signal lines when the on-voltage is applied; a reading circuit for converting the electric charge discharged from the radiation detection elements into image data and reading out the image data; and a control device for controlling at least the scanning drive unit and the reading circuit to perform reading out the image data from the radiation detection elements, wherein the control device is configured to repeat reading out the image data for detection of the start of irradiation by allowing the scanning drive unit to apply on-voltage sequentially to each of the scanning lines, and is further configured to detect that irradiation has started when a value of any one of the image data for detection of the start of irradiation calculated using a plurality of calculation methods exceeds a corresponding set threshold value among a plurality of threshold values each of which is set for each of the respective plurality of calculation methods, prior to radiation image capturing operation, and wherein the plurality of calculation methods comprise calculating the average value for a signal line, calculating the difference between an average value and a moving average value for a signal line, calculating the difference between the maximum value and the minimum value of the difference between an average value and a moving average value for a signal line and calculating the accumulated value of the difference between an average value and a moving average value for a signal line; a communication unit for exchanging signals with an external device; and an image processing apparatus for generating a radiation image based on the image data sent from the radiation image capturing apparatus, wherein the controller is further configured to send information of the calculation method used for the calculation of the value by which the start of irradiation was detected and wherein the image processing apparatus identifies a range of the image data containing a defect based on the information of the calculation method sent from the radiation image capturing apparatus, and repairs the image data in the identified range with a recovery method corresponding to the calculation method.

As will be described later, according to the new method of detecting the start of irradiation found out by the present inventors, prior to radiographic image capturing operation, on-voltage is sequentially applied to the lines L1 through Lx of the scanning line 5 from the gate driver 15b of the scanning driving means 15 and image data d is read out. It should be noted that, in the following description, the image data for irradiation start detection read out to detect the start of irradiation prior to this radiographic image capturing operation will be called "image data d", as distinguished from the image data D as a final image immediately after image capturing operation.

When the radiographic image capturing device is exposed to radiation, there is an increase in the value of image data d to be read. This phenomenon is used in such a way that, based on the value of the image data d read out, the start of irradiation on radiographic image capturing device is detected.

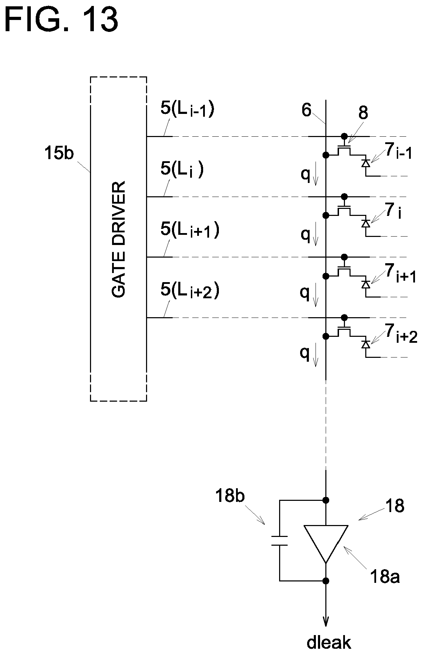

According to the new method of detecting the start of irradiation found out by the present inventors, prior to radiographic image capturing operation, off-voltage is applied to all the scanning lines 5 from the gate driver 15b of the scanning driving means 15 so that the TFT's 8 are turned off. After that, the reading circuit 17 is allowed to perform reading operation. Then the electric charge q (Fig. 13 to be described later) leaking from the radiation detection element 7 is converted into the leak data d leak through the TFT's 8 in the leak data d leak read-out process.

In this case as well, when the radiographic image capturing device is exposed to radiation, there is an increase in the value of leak data d leak to be read. This phenomenon is used in such a way that, based on the value of the leak data d leak read out, the start of irradiation on radiographic image capturing device is detected.

In this case, as described above, when TFT's 8 are turned off in the leak data d leak read-out process. If the TFT's 8 are kept turned off, so-called dark electric charge constantly occurring due to thermal excitation or the like caused by the heat (temperature) of the radiation detection element 7 itself will be accumulated in the radiation detection elements 7.

Thus, as will be described later, on-voltage is sequentially applied to the scanning line 5 from the gate driver 15b to remove dark electric charge from the radiation detection elements 7. This resetting process of the radiation detection elements 7 is repeated alternately with leak data d leak read-out process.

As described above, however, when the radiographic image capturing device is exposed to radiation, there is an increase in the value of image data d to be read. This signifies that part of the useful electric charge generated in the radiation detection element 7 due to irradiation flows from the radiation detection element 7 to the signal line 6 as a result of image data d read-out processing.

Further, when leak data d leak read-out processing is performed prior to radiographic image capturing, an increase of electric charge q leaking from the radiation detection element 7 through the TFT 8 by irradiation, if any, is very small without giving any impact, as compared to the total amount of the useful electric charge generated in the radiation detection element 7 due to irradiation.

However, the resetting process of the radiation detection elements 7 repeated alternately with leak data d leak read-out process may cause part of the useful electric charge generated in the radiation detection element 7 due to irradiation, to flow from the radiation detection element 7 to the signal line 6.

As described above, part of the useful electric charge generated by irradiation flows to signal lines 6 from the radiation detection elements 7 connected to the scanning line 5 with the on-voltage applied from the gate driver 15b by image data d read-out processing or resetting of the radiation detection elements 7.

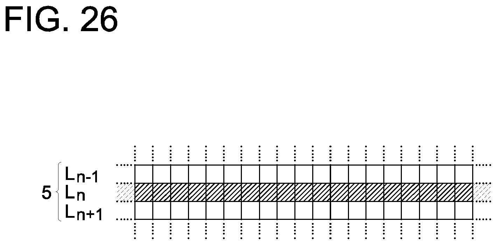

Thus, as shown in Fig. 26 (to be described later), a line of image data D with part of the useful electric charge missing, i.e., so-called linear defect, appears on the portion, corresponding to the scanning line 5, of the image data D read as a final image (or the radiographic image generated based thereon). This linear defect occurs inevitably as long as the aforementioned new method of detecting the start of irradiation found out by the present inventors is adopted.

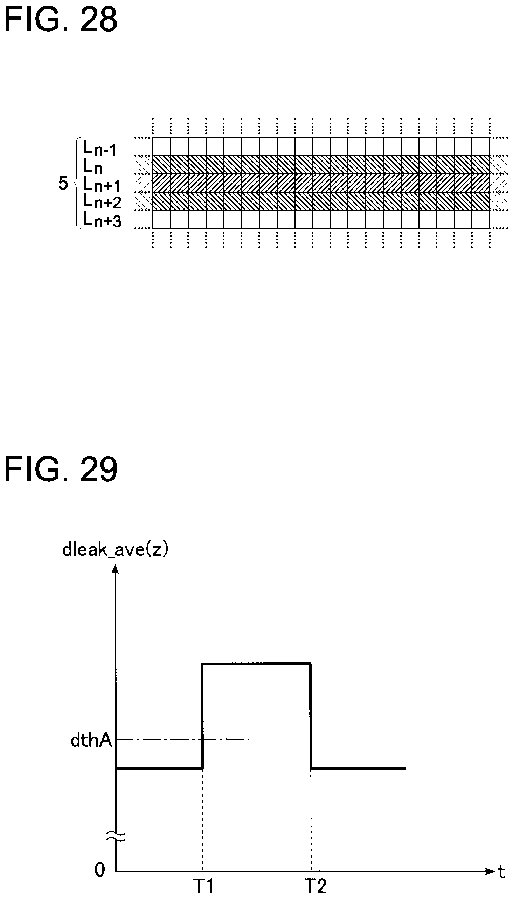

Depending on the method of detecting the start of irradiation by the radiographic image capturing device itself, much time will be taken from the actual start of irradiation on the radiographic image capturing device from the radiation source to the detection of the start of irradiation by the radiographic image capturing device. During this time, a great number of linear defects may occur. In this case, as shown in Fig. 28, linear defects will appear in the image data D read as a final image (or radiographic image generated based thereon) on a continuous basis.

When there is no linear defect, if a radiographic image is generated based on the image data D having linear defects, a linear pattern (or band-shaped pattern wherein many linear defects occurs on a continuous basis) will be copied into the radiographic image, with the result that the radiographic image will have poor viewability.

Further, for example, when a radiographic image captured by the radiographic image capturing device is used for medical diagnosis and a lesion is picked up onto the portion of linear defect, it may be difficult to determine if it is a lesion or a pattern of linear defect. As a result, the doctor watching such a radiographic image may commit a diagnostic error.

In the radiographic image capturing system using the aforementioned radiographic image capturing device, it is hoped that, even if the aforementioned linear defect has inevitably occurred in the image capturing operation by the radiographic image capturing device, the defect can be properly corrected to ensure accurate generation of the radiographic image without linear defect contained therein.

Fig. 1 is a perspective view representing an external view of a radiographic image capturing device in the present embodiment;

Fig. 2 is a cross section taken along arrow line X-X in Fig. 1;

Fig. 3 is a perspective view representing a cable connector connected to the connector of the radiographic image capturing device;

Fig. 4 is a plan view showing the structure of a substrate of the radiographic image capturing device;

Fig. 5 is an enlarged view of the structure of the radiation detection element and TFT formed on a small region of the substrate of Fig. 4;

Fig. 6 is a side view showing the substrate of a flexible circuit and the substrate with a PCB substrate mounted thereon;

Fig. 7 is a block diagram showing the equivalent circuit of the radiographic image capturing device;

Fig. 8 is a block diagram showing the equivalent circuit for one pixel constituting the detecting section;

Fig. 9 is a timing chart showing the on-off timing of the electric charge resetting switch and TFT in the radiation detection element resetting operation;

Fig. 10 is a timing chart showing the on-off timing of the electric charge resetting switch, pulse signals and TFT in the image data read-out operation;

Fig. 11 is a diagram showing the structure of the radiographic image capturing system installed in a radiographing room;

Fig. 12 is a diagram showing the structure of the radiographic image capturing system installed on a doctor's round visiting car;

Fig. 13 is a diagram showing that the electric charge leaking out of radiation detection elements through the TFT's is read as leak data;

Fig. 14 is a timing chart showing the on-off timing of the electric charge resetting switch and TFT in the image data read-out operation;

Fig. 15 is a timing chart showing the on-off timing of the electric charge resetting switch, pulse signals and TFT when leak data read-out processing and radiation detection element reset processing are performed on an alternate basis, prior to radiographic image capturing operation;

Fig. 16 is a timing chart showing the timing for applying on-voltage to scanning lines in the detection method 1;

Fig. 17 is a chart wherein the leak data to be read out is plotted in chronological order;

Fig. 18 is a timing chart showing the timing for applying on-voltage sequentially to scanning lines in cases where, prior to radiographic image capturing operation, image data read-out processing is repeated in detection method 2;

Fig. 19 is a timing chart showing the on/off timing and on-time $\Delta T$ of the electric charge resetting switch, pulse signals and TFT's in the image data read-out processing, prior to radiographic image capturing operation;

Fig. 20 is a timing chart showing the timing for applying the on-voltage to the scanning lines in the detection method 2;

Fig. 21 is a timing chart showing that leak data read-out processing continues after detection of the start of irradiation in Fig.16;

Fig. 22 is a chart showing a decrease in the volume of leak data upon completion of irradiation;

Fig. 23 is a diagram showing that radiation is applied to the radiographic image capturing device where the irradiation field is defined;

Fig. 24 is a chart showing an example of the chronological transition of mean value for each IC for the leak data read in the reading circuits;

Fig. 25 is a timing chart showing the timing for applying on-voltage to the scanning lines in offset data read-out processing by repeating the processing sequence shown in Fig. 16;

Fig. 26 is a diagram showing the linear defect having occurred to the image data and radiographic image;

Fig. 27 is timing chart showing an example of the timing for sequentially applying on-voltage to scanning lines when image data read-out processing has been performed several times due to a delay in the detection of irradiation start;

Fig. 28 is a diagram showing that a linear defect occurs on a continuous basis;

Fig. 29 is a chart representing the chronological transition of the mean value obtained by using the detection method A to compute the leak data having been read out;

Fig. 30 is a chart representing the chronological transition of the maximum value of the differences obtained by using the detection method B to compute the leak data having been read out;

Fig. 31 is a chart showing the chronological change of the difference obtained by using the detection method C to compute the leak data having been read out;

Fig. 32 is a chart showing the chronological change of accumulated value obtained by using the detection method D to compute the read-out leak data having been read out;

Fig. 33 is a diagram showing an example of the true image data and a chart showing an example of the profile of the mean value for each scanning line;

Fig. 34 is a chart showing an example of the profile of the mean value for each scanning line wherein the range of the true image data containing a defect cannot be easily identified under the - influence of the true image data having a greater value free from a defect;

Fig. 35A is a diagram showing an example of the image data extracted by subject region identification processing; Fig. 35B is a chart showing an example of distribution of the extracted true image data; and Fig. 35C is a diagram showing an example of the region wherein a determined subject is captured;

Fig. 36 is a chart showing the technique of specifying the range of the true image data containing a defect;

Fig. 37 is a chart showing that the absolute value of the difference of the mean value can be below the threshold value in the range of the image data containing a defect; and

Fig. 38 is a chart showing an example of the straight line obtained by approximation of mean values except for those specified as a range of true image data containing a defect.

## DETAILED DESCRIPTION OF THE PREFERRED EMBODIMENTS

Referring to drawings, the following describes the embodiments of the radiographic image capturing system and radiographic image capturing device of the present invention.

The following describes a radiographic image capturing device used in the radiographic image capturing system, with reference to a so-called indirect type radiographic image capturing device that is provided with a scintillator and is designed to get electric signals by conversion of the applied radiation into electromagnetic waves having different wavelengths such as visible light. The present invention is also applicable to the so-called direct type radiographic image capturing device where radiation is directly detected by a radiation detection element without using an intermediary of a scintillator.

[Radiographic image capturing device]

In the first place, the following describes the radiographic image capturing device of the present embodiment:

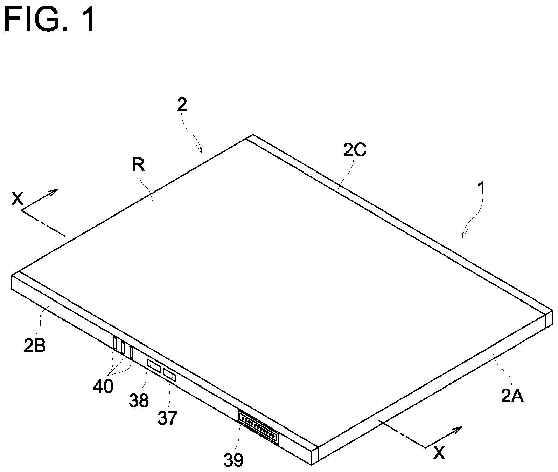

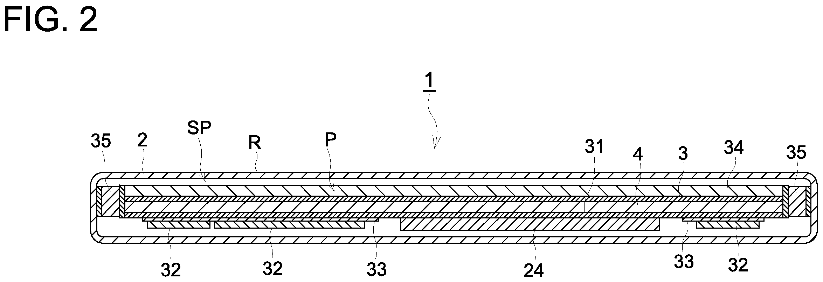

Fig. 1 is a perspective view representing an external view of a radiographic image capturing device in the present embodiment. Fig. 2 is a cross section taken along arrow line X-X in Fig. 1. In the radiographic image capturing, device 1, a sensor panel SP including a scintillator 3 and substrate 4 is incorporated in a casing-shaped housing 2, as shown in Fig. 1 and Fig. 2.

In the present embodiment, the hollow rectangular sleeve-like housing proper 2A of the casing 2 having a radiation input surface R is formed of a carbon board or plastic material that allows passage of radiation. The casing 2 is formed by closing the openings on both sides of the housing proper 2A with cover members 2B and 2C.

Further, the cover member 2B placed on one side of the casing 2 is provided with a power switch 37, change-over switch 38, connector 39, and indicator 40 including an LED for indicating the battery state and operation state of the radiographic image capturing device 1.

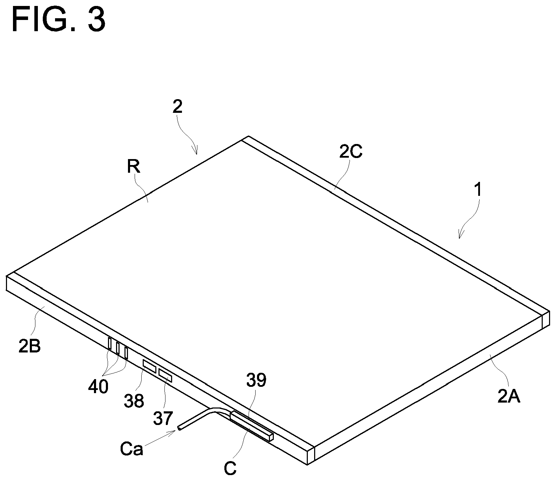

In the present embodiment, as shown in Fig. 3, for example, when linked with the connector C installed on the tip end of a cable Ca, the connector 39 serves to exchange signals and others with the console 58 (Fig. 11 and Fig. 12) and others (to be described later) through the cable Ca, and provides a wired communication means when image data D and others are sent to the console 58 as an image processing device. The installation position of the connector 39 is not restricted to the cover member 2B. The connector 39 can be installed at a proper position of the radiographic image capturing device 1.

Although not illustrated, for example, the cover member 2C on the side opposite to the casing 2 is provided with an antenna device 41 (Fig. 7 to be described later) that is, for example, embedded into the cover member 2C. In the present embodiment, this antenna device 41 provides a wireless communication means for exchanging signals and others between the radiographic image capturing device 1 and console 58 or the like.

The installation position of the antenna device 41 is not restricted to the cover member 2C. The antenna device 41 can be installed at a proper position of the radiographic image capturing device 1. The number of the antenna devices 41 is not restricted to one. A plurality of antenna devices 41 can be installed.

As shown in Fig. 2, inside the casing 2, a support base 31 is installed below the substrate 4 through a thin lead plate (not illustrated). The support base 31 is provided with electronic parts 32 and others. A PCB substrate 33, battery 24 and others are installed. Further, the radiation input surfaces R of the substrate 4 and scintillator 3 have a glass substrate 34 for protection. In the present embodiment, a cushioning member 35 is provided between the sensor panel SP and the side of the casing 2 to protect them against collision.

The scintillator 3 is located at the position of the substrate 4 opposed to the detection portion P (to be described later). In the present embodiment, the scintillator 3 is mainly composed of fluorophore, for example. When exposed to radiation, the radiation is outputted after having been converted into the electromagnetic wave having a wavelength of 300 through 800 nm, namely, the electromagnetic wave mainly consisting of visible light.

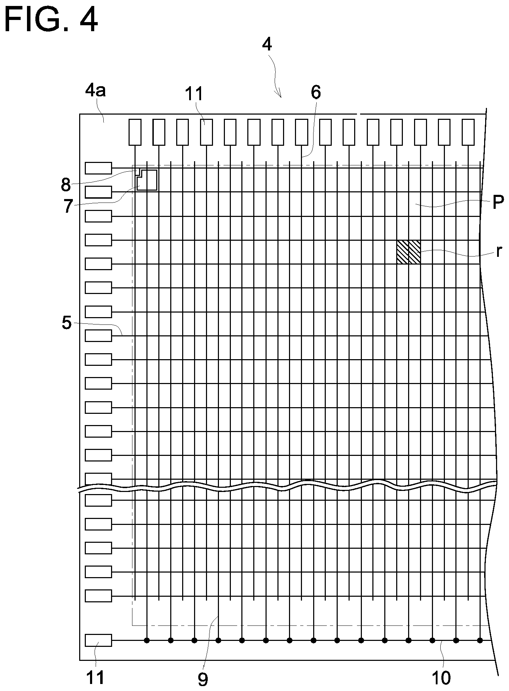

In the present embodiment, the substrate 4 is composed of a glass substrate. On the surface 4a on the side opposed to the scintillator 3 of the substrate 4, a plurality of scanning lines 5 and a plurality of signal lines 6 are arranged so as to cross with each other, as shown in Fig. 4. A radiation detection element 7 is installed on each of the smaller regions r partitioned by a plurality of scanning lines 5 and a plurality of signal lines 6 on the surface 4a of the substrate 4. As described, all the smaller regions r, namely, the region indicated by a one-dot chain line in Fig. 4, wherein a plurality of radiation detection elements 7 arranged in a two-dimensional array in small regions r partitioned by the a plurality of scanning lines 5 and a plurality of signal lines 6 are assumed as constituting a detection portion P.

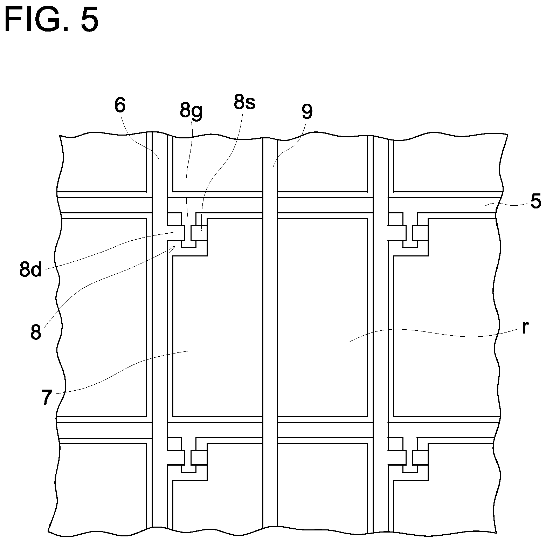

In the present embodiment, a photodiode is used as a radiation detection element 7. In addition, a photo transistor can also be used, for example. As shown in Fig. 5 as an enlarged view of Fig. 4, the radiation detection elements 7 is connected to the source electrode 8s of the TFT 8 of the switching means. The source electrode 8s of the TFT 8 is connected with a signal line 6.

Radiation is applied from the radiation input surface R of the casing 2 of the radiographic image capturing device 1 and converted into electromagnetic waves such as visible light by a scintillator 3. When the radiation detection element 7 is exposed to this electromagnetic wave, an electron-hole pair is generated inside. Radiation applied in this manner (electromagnetic wave converted from radiation by the scintillator 3 in the present embodiment) is converted into the electric charge by the radiation detection element 7.

When on-voltage is applied to the gate electrode 8g from the scanning driving means 15 (to be described later) through the scanning line 5, the TFT 8 is turned on. Then the electric charge accumulated in the radiation detection element 7 is discharged to the signal line 6 through the source electrode 8s and drain electrode 8d. Further, off-voltage is applied to the gate electrode 8g through the connected scanning line 5, the TFT 8s is turned off Discharge of the electric charge from the radiation detection element 7 to the signal line 6 is suspended and electric charge is then accumulated in the radiation detection element 7.

In the present embodiment, as shown in Fig. 5, one bias line 9 is connected to each of a plurality of radiation detection elements 7 arranged in a row. As shown in Fig. 4, each bias line 9 is installed parallel to the signal line 6. Bias lines 9 are bound and connected to the connecting line 10 outside the detection portion P of the substrate 4.

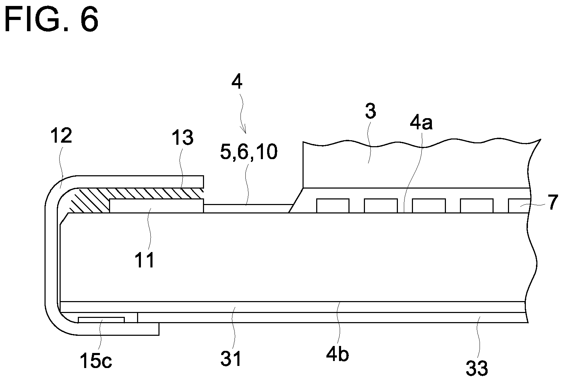

In the present embodiment, the scanning lines 5, signal lines 6, and connecting lines 10 of the bias line 9 are connected to the input/output terminals (also called pads) 11 provided close to the edge of the substrate 4, as shown in Fig. 4. Each input/output terminal 11 is connected with a flexible circuit substrate (also called a chip-on-film) 12 wherein a chip such as a gate IC 15c constituting the gate driver 15b of the scanning driving means 15 (to be described later) is assembled on the film, through the anisotropic conductive adhesive material 13 such as a anisotropic conductive film and anisotropic conductive paste, as shown in Fig. 6.

The flexible circuit substrate 12 is routed to the back side 4b of the substrate 4 and is connected with the above-mentioned PCB substrate 33 on the back side 4b. This is how the sensor panel SP of the radiographic image capturing device 1 is formed. In Fig. 6, the electronic parts 32 and others are not illustrated.

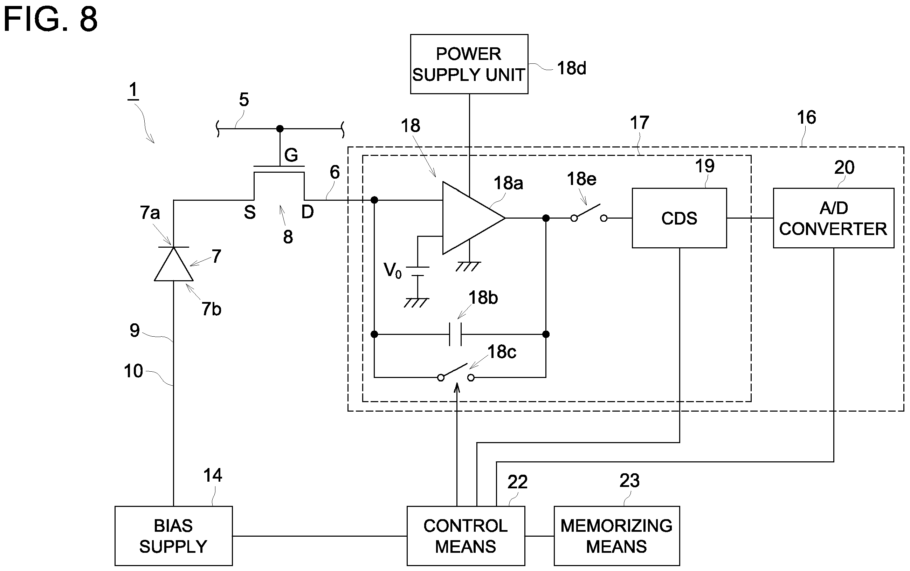

The following describes the circuit configuration of the radiographic image capturing device 1: Fig. 7 is a block diagram showing the equivalent circuit of the radiographic image capturing device of the present embodiment. Fig. 8 is a block diagram showing the equivalent circuit for one pixel constituting the detecting section P.

As described above, in the radiation detection elements 7 of the detection portion P of the substrate 4, bias lines 9 are connected to the second electrode 7b. The bias lines 9 are bound into a connecting line 10 and connected to the bias supply 14. The bias supply 14 applies bias voltage to the second electrode 7b of the radiation detection elements 7 through the connecting line 10 and bias line 9. The bias supply 14 is connected to the control means 22 (to be described later), and the bias voltage applied to the radiation detection elements 7 from the bias supply 14 is controlled by the control means 22.

As shown Fig. 7 and Fig. 8, in the present embodiment, the voltage (i.e., so-called inverse bias voltage) below the voltage applied to the first electrode 7a of the radiation detection element 7 as a bias voltage is applied to the second electrode 7b of the radiation detection element 7 from the bias supply 14 through the bias line 9.

The scanning driving means 15 is provided with a power circuit 15a for supplying the gate driver 15b with on-voltage and off-voltage through the wiring 15d, and a gate driver 15b for switching the on- and off-states of the TFT's 8. by switching the on- and off-states of the voltage applied to the lines L1 through Lx of the scanning line 5. In the present embodiment, the gate driver 15b is composed of a plurality of the above-mentioned gates IC 15c (Fig, 6) installed in parallel.

As shown in Fig. 7 and Fig. 8, the signal lines 6 are connected to the reading circuits 17 built in the reading IC 16. The reading circuit 17 is formed of an amplifier circuit 18 and correlated dual sampling circuits 19. An analog multiplexer 21 and A/D converter 20 are built in the reading IC 16. In Fig. 7 and Fig. 8, the correlated dual sampling circuit 19 is described as CDS. In Fig. 8, the analog multiplexer 21 is omitted.

In the present embodiment, the amplifier circuit 18 is formed of an operation amplifier 18a, and a charge amplifier circuit wherein the operation amplifier 18a is connected with the capacitor 18b and electric charge resetting switch 18c, the charge amplifier circuit being provided with a power supplying unit 18d for supplying power to the operation amplifier 18a and others. The reversing input terminal on the input side of the operation amplifier 18a of the amplifier circuit 18 is connected with a signal line 6. Reference potential $V_0$ is applied to the non-reversing input terminal on the input side of the amplifier circuit 18. The reference potential $V_0$ is set at an appropriate level. In the present embodiment, this potential is set at zero volts, for example.

The electric charge resetting switch 18c of the amplifier circuit 18 is connected to the control means 22, and on-off control is provided by the control means 22. A switch 18e for closing and opening synchronously with the electric charge resetting switch 18c is provided between the operation amplifier 18a and correlated dual sampling circuit 19. In the switch 18e, the electric charge resetting switch 18c performs the on/off operation synchronously with the on/off operation.

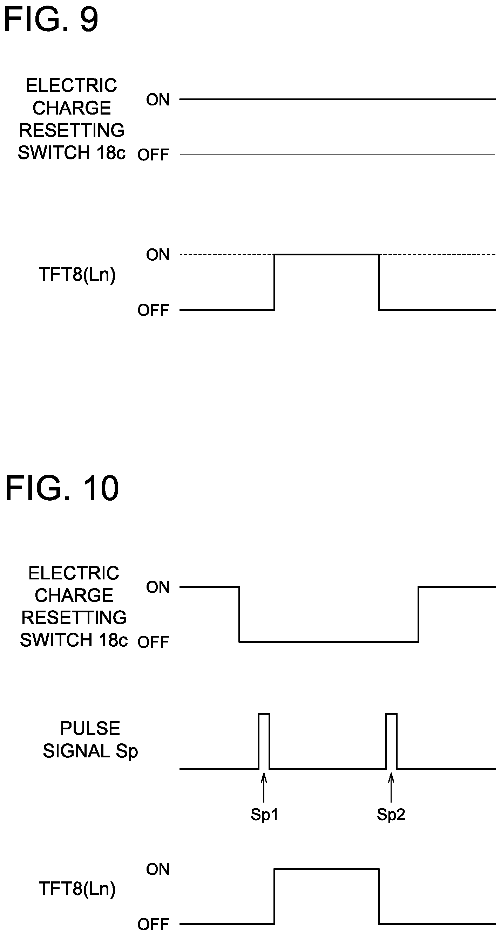

When the radiographic image capturing device 1 performs the operation of resetting the radiation detection elements 7 to remove electric charges remaining inside the radiation detection elements 7, the TFT's 8 are turned on when the electric charge resetting switch 18c is kept turned on (and switch 18e is turned off), as shown in Fig. 9.

The electric charge is then discharged to the signal line 6 from the radiation detection elements 7 through the TFT's 8 having been turned on. The electric charge passes through the electric charge resetting switch 18c of the amplifier circuit 18 and flows into the operation amplifier 18a from the output terminal of the operation amplifier 18a. Then the electric charge flows out of the non-reversing input terminal into the ground, or is fed to the power supplying unit 18d. This is how the radiation detection elements 7 are reset.

In the meantime, when image data D from the radiation detection elements 7 is read out, the electric charge is discharged to the signal line 6 from the radiation detection elements 7 through the TFT's 8 which are turned on, as shown in Fig. 10, while the electric charge resetting switch 18c of the amplifier circuit 18 is turned off (and switch 18e is on). Then the electric charge is accumulated in the capacitor 18b of the amplifier circuit 18.

In the amplifier circuit 18, the voltage value in conformity to the amount of the electric charge accumulated in the capacitor 18b is outputted from the output side of the operation amplifier 18a. The electric charge discharged from the radiation detection elements 7 is converted into the electric charge voltage by the amplifier circuit 18.

When the pulse signals Sp1 (Fig. 10) is sent from the control means 22 before the electric charge flows out of the radiation detection elements 7, the correlated dual sampling circuit (CDS) 19 provided on the output side of the amplifier circuit 18 maintains the voltage value Vin outputted from the amplifier circuit 18 at that moment. When the pulse signals Sp2 are sent from the control means 22 after the electric charge flowing out of the radiation detection elements 7 as mentioned above have been accumulated in the capacitor 18b of the amplifier circuit 18, the correlated dual sampling circuit (CDS) 19 maintains the voltage value Vfi outputted from the amplifier circuit 18 at that moment.

When the voltage value Vfi is maintained by the second pulse signals Sp2, the correlated dual sampling circuit 19 calculates the difference Vfi-Vin of the voltage value. The calculated difference Vfi-Vin is then outputted downstream as the image data D of the analog value. The image data D of the radiation detection elements 7 outputted from the correlated dual sampling circuit 19 is sequentially sent to the A/D converter 20 and is converted into the image data D of the digital value by the A/D converter 20 through the analog multiplexer 21. The image data D is outputted to the memorizing means 23 to be stored therein.

Upon completion of the operation of reading the first image data D, the electric charge resetting switch 18c of the amplifier circuit 18 is turned on (Fig. 10), and electric charge accumulated in the capacitor 18b is discharged. Similarly to the above, the discharged electric charge passes through the operation amplifier 18a from the output terminal side of the operation amplifier 18a, and is outputted to be led to the ground. Alternatively, this electric charge is outputted from the non-reversing input terminal and is led to the ground, or is fed to the power supplying unit 18d. The amplifier circuit 18 is then reset.

The control means 22 is formed of a computer connected with the CPU (Central Processing Unit), ROM (Read Only Memory), RAM (Random Access Memory) and input/output interface (not illustrated) through a bus, and an FPGA (Field Programmable Gate Array). The control means 22 can be formed of a special-purpose control circuit.

The control means 22 controls the operations of various members of the radiographic image capturing device 1. As shown in Fig. 7, the control means 22 is connected with a memorizing means 23 composed of a SRAM (Static RAM) and SDRAM (Synchronous DRAM).

In the present embodiment, the control means 22 is connected with the above-mentioned antenna device 41 as well as the battery 24 for supplying power to the detection portion P, scanning driving means 15, reading circuit 17, memorizing means 23, bias supply 14 and other members. The battery 24 is provided with a connection terminal 25 for charging the battery 24 by supplying power to the battery 24 from a charging device (not illustrated).

As described above, the control means 22 controls the operations of various functional components of the radiographic image capturing device 1, for example, by controlling the bias supply 14 to set or change the bias voltage applied to the radiation detection elements 7 from the bias supply 14.

Detection of the start of irradiation in the radiographic image capturing device 1 will be described after the radiographic image capturing system 50 of the present embodiment.

[Radiographic image capturing system]

The radiographic image capturing system of the present embodiment will be described below: Fig. 11 and Fig. 12 show the structure of the radiographic image capturing system of the present embodiment.

Fig. 11 is a diagram showing the structure of the radiographic image capturing system installed in a radiographing room R1 or anteroom (also called an operation room, etc.) of a hospital. Fig. 12 is a diagram showing the structure of the radiographic image capturing system 50 installed on a doctor's round visiting car 71 to be moved into the medical ward R3. In Fig. 12, H indicates the test subject as a subject, and B represents a bed B wherein the subject lies down.

As shown in Fig. 11, the radiographic image capturing system 50 will be described mainly with reference to the case wherein the radiographic image capturing system 50 is installed in a radiographing room R1 or the like. The description also applies to the case wherein the radiographic image capturing system 50 is installed on the doctor's round visiting car 71 of Fig. 12.

As shown in Fig. 11, the radiographing room R1 is provided with a Bucky's radiographic device 51, and the Bucky's radiographic device 51 can be used by installing the aforementioned radiographic image capturing device 1 on the cassette holding section (also called a cassette holder) 51a thereof.

In Fig. 11, a Bucky's radiographic device 51 A for image capturing at a standing position and a Bucky's radiographic device 51 B for image capturing at a recumbent position are mounted as a Bucky's radiographic device 51. However, only a Bucky's radiographic device 51A for image capturing at a standing position or only a Bucky's radiographic device 51B for image capturing at a recumbent position can be mounted, for example.

The radiographic image capturing device 1 can be mounted on the Bucky's radiographic device 51 while the connector 39 of to the radiographic image capturing device 1 is connected with the connector C which is provided on the tip end of a cable Ca extended from the Bucky's radiographic device 51, as shown in Fig. 3, for example.

As described above, in this case, the radiographic image capturing device 1 can exchange signals in a wired system with the console 58 through the connector 39 or cable Ca, or can send image data D to the console 58 as an image processing device.

As shown in Fig. 12, when the radiographic image capturing system 50 is installed on the doctor's round visiting car 71, image capturing operation can be performed with the radiographic image capturing device 1 connected with the cable Ca, as shown in Fig. 3. When the cable Ca interrupts with the image capturing operation of the radiographer or others, image capturing operation can be performed without the radiographic image capturing device 1 being connected with the cable Ca.

As shown in Fig. 11, the radiographing room R1 is provided with at least one radiation generator 52 for applying radiation to the radiographic image capturing device 1 mounted on the Bucky's radiographic device 51 through the intermediary of the subject. In the present embodiment, one radiation generator 52 can apply radiation to both the Bucky's radiographic device 51 A for image capturing at a standing position and the Bucky's radiographic device 51 B for image capturing at a recumbent position, by changing the position of the radiation generator 52 or changing the direction of applying radiation.

In the meantime, the radiographic image capturing system 50 installed on the doctor's round visiting car 71 is used independently, without the radiographic image capturing device 1 being mounted on the Bucky's radiographic device 51, as shown in Fig. 12. For example, when a patient H is unable to stand up from the bed B of the medical ward R3 to go into the radiographing room R1, the radiographic image capturing device 1 can be inserted between the bed B and patient's body, or can be applied to the patient's body, as shown in Fig. 12.

Further, when the radiographic image capturing device 1 is used in the medical ward R3 or the like, the irradiation device 55 or radiation generator 52 installed in the above-mentioned radiographing room R1 cannot be brought into the medical ward R3. Accordingly, the irradiation device 55 is mounted, for example, on the doctor's round visiting car 71, and is brought into the medical ward R3, as shown in Fig. 12.

In this case, the radiation generator 52P is configured to apply radiation in any desired direction. Radiation can be applied to the radiographic image capturing device 1 from a desired distance or direction by making an adjustment, for example, by inserting the radiographic image capturing device 1 between the bed B and patient's body, or by applying the same to the patient's body

As shown in Fig. 11, in the radiographing room R1 as well, the radiographic image capturing device 1 can be used, for example, by inserting between the patient's body on the Bucky's radiographic device 51 B for image capturing at a recumbent position and Bucky's radiographic device 51B for image capturing at a recumbent position, or by applying to the patient's body on the Bucky's radiographic device 51 B for image capturing at a recumbent position. In this case, a portable radiation source can be used as the radiation generator 52.
Further, the radiation generator 52 installed in the radiographing room R1 can also be used.

As shown in Fig. 11, the radiographing room R1 is provided with a relay (also called a base station) 54 for relaying communication with the devices in and out of the radiographing room R1. In the present embodiment, the relay 54 is provided with a wireless antenna (also called an access point) 53 to permit wireless exchange of image data D and signals of the radiographic image capturing device 1.

Further, the relay 54 is connected with the irradiation device 55 and console 58. The relay 54 includes a built-in converter (not illustrated) for ensuring that the LAN communication signal sent to the irradiation device 55 from the radiographic image capturing device 1 and console 58 is converted into the signals for irradiation device 55, and, conversely, the signals for irradiation device 55 is converted into the LAN communication signal.

The radiographic image capturing system 50 installed on the doctor's round visiting car 71 shown in Fig. 12 is provided with a converter inside or outside the irradiation device 55 for converting the LAN communication signal into the signals for irradiation device 55, and converting the signals for irradiation device 55 into the LAN communication signal. This converter is equipped with a wireless antenna 53.

In the present embodiment, the anteroom (also called the operation room) R2 is provided with the operation console 57 of the irradiation device 55, and the operation console 57 is equipped with a radiation exposure switch 56 to be operated by a radiographer and others to instruct the start of irradiation to the irradiation device. In the present embodiment, radiation is applied from the radiation generator 52 through the operation of the radiation exposure switch 56 by the radiographer.

In the radiographic image capturing system 50 installed on the doctor's round visiting car 71 of Fig. 12, the irradiation device 55 mounted on the doctor's round visiting car 71 serves as an operation console 57, and the irradiation device 55 is equipped with the radiation exposure switch 56 not illustrated in Fig. 12.

The irradiation device 55 controls the radiation generator 52 by supplying a prescribed tube current or voltage to the radiation generator 52 or by adjusting the time of irradiation from the radiation generator 52 to ensure that radiation of an appropriate dose will be emitted from the radiation generator 52.

In the present embodiment, the console 58 made up of a computer and others is provided in the anteroom R2 in the case of Fig. 11. In the case of Fig. 12, the console 58 is mounted on the doctor's round visiting car 71. For Fig. 11, the console 58 can be mounted outside the radiographing room R1 or anteroom R2, or in a separate room. The console 58 can be installed at a desired position.

In the present embodiment, the console 58 is provided with a display section 58a (not illustrated in Fig. 12) made up of a CRT (Cathode Ray Tube), LCD (Liquid Crystal Display) and others, and is connected with, or incorporates, a memorizing means 59 (not illustrated in Fig. 12) made up of a HDD (Hard Disk Drive) and others.

When image data D or the like has been sent from the radiographic image capturing device 1, the console 58 displays a preview image of this data on the display section 58a. Watching the displayed preview image, the radiographer checks if the subject is included in the image or not, or if the subject's position on the image is appropriate or not, thereby determining if radiographic operation should be repeated or not.

In the present embodiment, the console 58 serves as an image processing device. When the radiographer has determined that radiographic operation need not be repeated, image data D is subjected to prescribed image processing such as offset correction, gain correction, faulty pixel correction or gradation processing, whereby a radiographic image is generated. The image processing in the console 58 as an image processing device will be described later.

[Control configuration for detection of start of irradiation]

The following describes the basic control configuration for detecting the start of irradiation in the radiographic image capturing device 1 of the present embodiment.

In the present embodiment, interface is not formed between the radiographic image capturing device 1 and irradiation device 55. The irradiation from the radiation generator 52 is detected by the radiographic image capturing device 1 itself The following describes how to detect the start of irradiation by the radiographic image capturing device 1 of the present embodiment.

The detection method of the present embodiment has been found out by the present inventors, without using the detection of the start of irradiation based on the output value from the current detecting means gained from a current detecting means installed inside the device, as described in the specifications of the above-mentioned U.S. Patent No. 7211803 or the Unexamined Japanese Patent Application Publication No. 2009-219538. The detection method found out by the present inventors allows use of any one of the following two detection methods, for example.

[Detection method 1]

For example, the radiographic image capturing operation can be configured in such a way that the read-out processing of the leak data d leak is repeatedly performed, prior to radiation applied to the radiographic image capturing device 1. The leak data d leak in the sense in which it is used here refers to the data corresponding to the total sum for each of the signal line 6 of the electric charge q leaking from the radiation detection elements 7 through the TFT's 8 placed in the off-state with off-voltage applied to scanning lines 5, as shown in Fig. 13.

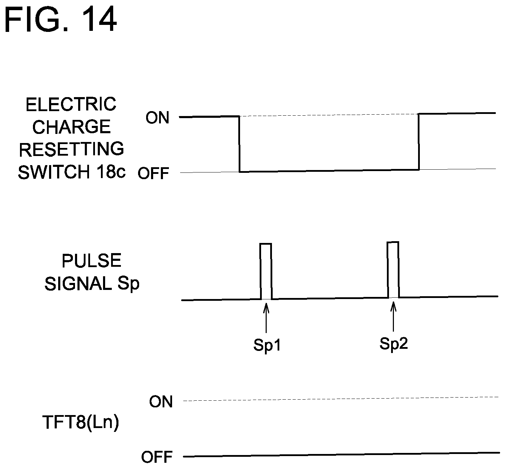

In the leak data d leak read-out processing, pulse signals Sp1, Sp2 are sent to the correlated dual sampling circuit 19 (CDS of Figs. 7 and 8) of each reading circuit 17 from the control means 22, with the TFT's 8 placed in the off-state by applying the off-voltage to the lines L1 through Lx of the scanning line 5 as shown in Fig. 14, unlike the image data D read-out processing illustrated in Fig. 10.

When pulse signals Sp1 have been sent from the control means 22, the correlated dual sampling circuit 19 holds the voltage value Vin output from the amplifier circuit 18 at that time point. The electric charge q leading from the radiation detection elements 7 is accumulated in the capacitor 18b of the amplifier circuit 18 through the TFT's 8, and the voltage value output from the amplifier circuit 18 rises. When pulse signals Sp2 have been sent from the control means 22, the correlated dual sampling circuit 19 holds the voltage value Vfi outputted from the amplifier circuit 18 at this moment.

The leak data d leak is the value outputted by the correlated dual sampling circuit 19 through calculation of the difference Vfi-Vin of the voltage value. After that, the leak data d leak is converted into the digital value by the A/D converter 20, similarly to the above-mentioned case of the read-out processing of image data D.

However, if the configuration is such that only the leak data d leak read-out processing is repeated, the TFT's 8 will be kept at an off-state, and the dark electric charge generated in the radiation detection elements 7 will be kept accumulated inside the radiation detection elements 7.

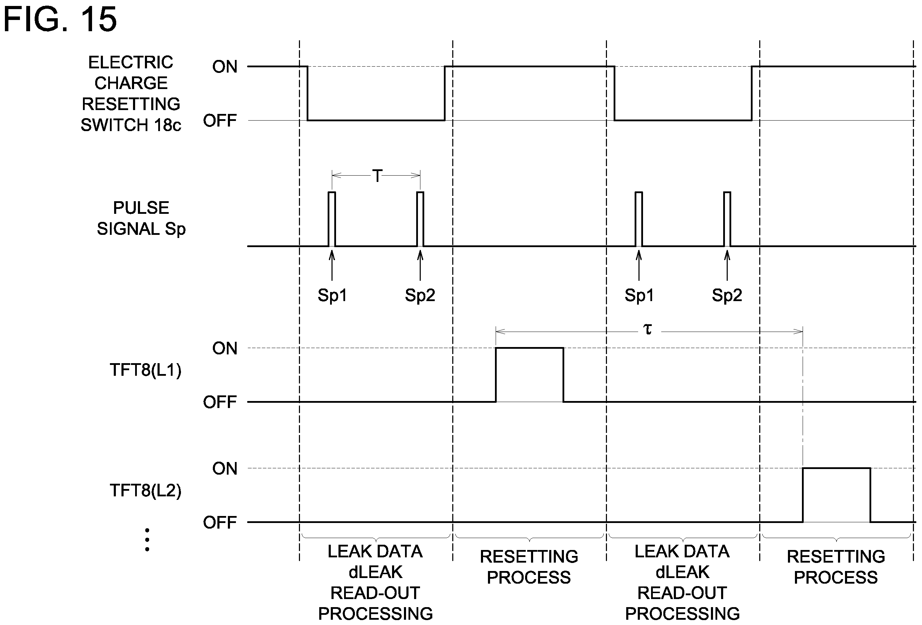

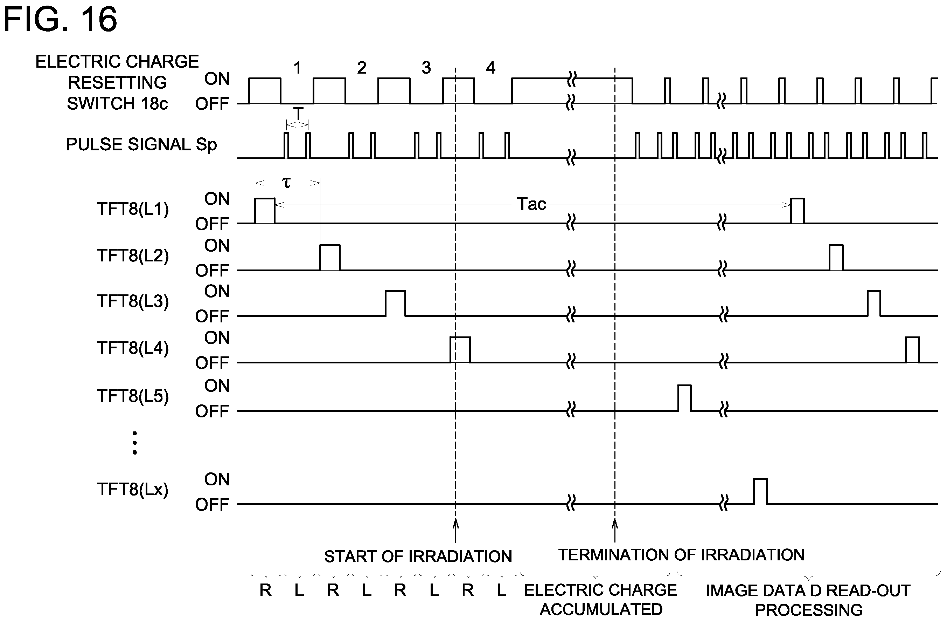

Thus, when the leak data d leak read-out operation to be repeated prior to radiographic image capturing operation, as described above, the structure is preferably configured in such a way that there is alternate repetition between the leak data d leak read-out operation performed with the off-voltage kept applied to the scanning lines 5, and the operation of resetting the radiation detection elements 7 performed by sequential application of the on-voltage to the lines L1 through Lx of the scanning line 5, as shown in Fig. 15. Symbols T and $\tau$ of Figs. 15 and 16 will be described later.

When the structure is configured in such a way that alternate repetition is made between the leak data d leak read-out operation and the operation of resetting the radiation detection elements 7 prior to radiographic image capturing operation, as described above, the electromagnetic wave converted from radiation by the scintillator 3 (Fig. 2) is applied to the TFT's 8 if radiation has been applied to the radiographic image capturing device 1. This causes an increase in the amount of the electric charge q (Fig. 13) leaking from the radiation detection elements 7 through the TFT's 8, as revealed in the study by the present inventors.

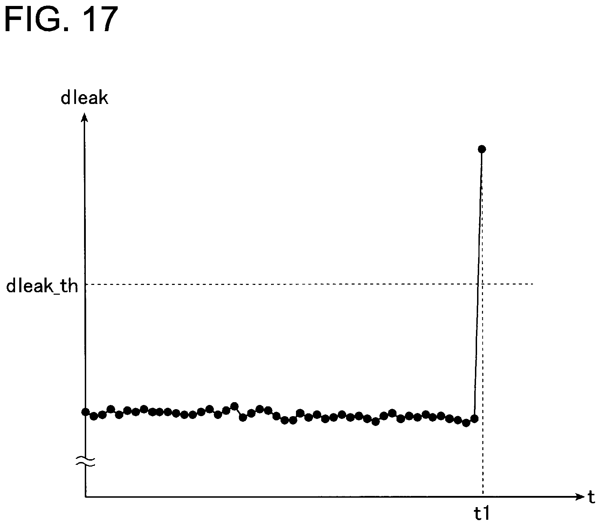

For example, when there is alternate repetition between the leak data d leak read-out operation and the operation of resetting the radiation detection elements 7 prior to radiographic image capturing operation, as shown in Fig. 16, the leak data d leak read out at the time of the start of irradiation on the radiographic image capturing device 1 will be much greater than the previously read leak data d leak, as shown in Fig. 17.

In Fig. 16 and Fig. 17, on-voltage is applied to the line L4 of the scanning line 5 in Fig. 16, and resetting operation is performed. The leak data d leak read out in the forth read-out processing subsequent to this resetting operation corresponds to the leak data d leak at time T1 of Fig. 17. The symbol "R" in Fig. 16 represents the operation of resetting the radiation detection elements 7, and "L" indicates the leak data d leak read-out processing. The "Tac" of Fig. 16 will be described later.

It is possible to arrange such a configuration that the leak data d leak read out by the leak data d leak read-out operation prior to radiographic image capturing is monitored by the control means 22 of the radiographic image capturing device 1, and the start of irradiation is detected when the leak data d leak having been read has exceeded a preset threshold value dleak_th (Fig. 17), for example.

In this case, when the start of irradiation has been detected as described above, the control means 22 stops application of on-voltage to scanning lines 5 at that moment as shown in Fig. 16, and applies off-voltage to all the lines L1 through Lx of the scanning line 5 from the gate driver 15b so that the TFT's 8 are placed in the off-state. Then the electric charge generated in the radiation detection elements 7 by irradiation is accumulated in the radiation detection elements 7 and is shifted to the electric charge accumulation state.

For example, after the lapse of a predetermined time subsequent to detection of the start of irradiation, simultaneously or immediately before the start of irradiation is detected in the leak data d leak read-out operation prior to radiographic image capturing operation, the control means 22 applies on-voltage starting from the scanning line 5 (line L5 of the scanning line 5 for Fig. 16) to which on-voltage is to be applied next to the scanning line 5 (line L4 of the scanning line 5 for Fig. 16) on which on-voltage has been applied. Thus, the on-voltage is sequentially applied to scanning lines 5 so that the image data D as a final image is read out.

Fig. 16 shows the case wherein the process of reading the image data D as a final image is performed by starting application of the on-voltage from the line Ln+1 immediately after the line Ln of the scanning line 5 to which on-voltage is applied, when the start of irradiation has been detected. It is also possible, for example, to perform the process of reading the image data D by starting the application of the on-voltage from the first line L1 of the scanning line 5.

[Detection method 2]

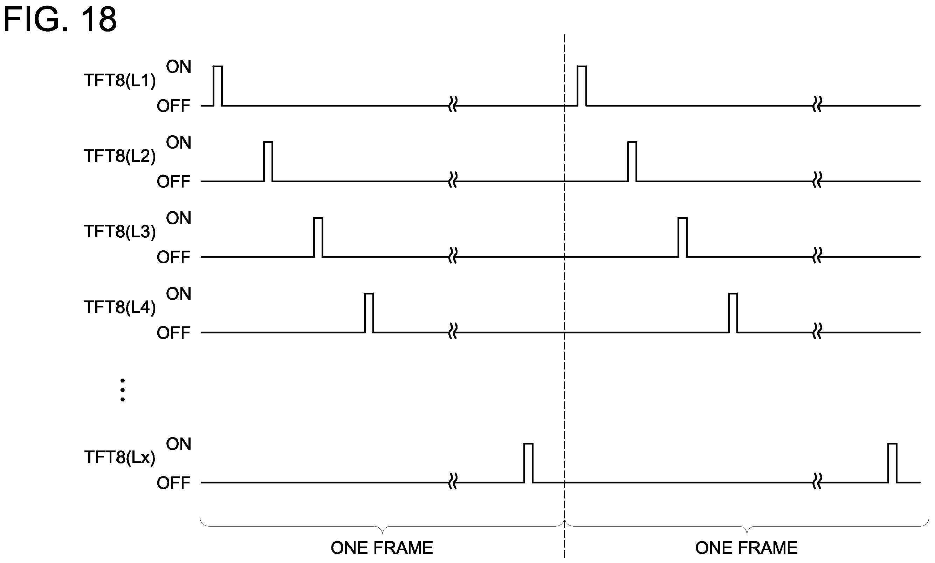

Instead of performing the process of reading the image data d leak prior to radiographic image capturing operation as shown in the aforementioned detection method 1, it is also possible to arrange such a configuration as to repeat the process of reading the image data d from the radiation detection elements 7 by sequential application of on-voltage from the gate driver 15b of the scanning driving means 15 to the lines L1 through Lx of the scanning line 5 prior to radiographic image capturing operation as shown in Fig. 18.

In the following description, the image data d will be defined as the image data for irradiation start detection read out for detection of the start of irradiation, prior to radiographic image capturing operation, as distinguished from the aforementioned image data D as a final image. Further, one frame in Fig. 18 refers to the time duration for reading out the image data d from the radiation detection elements 7 for one surface arranged in a two-dimensional array on the detection portion P (Fig. 4 and Fig. 7).

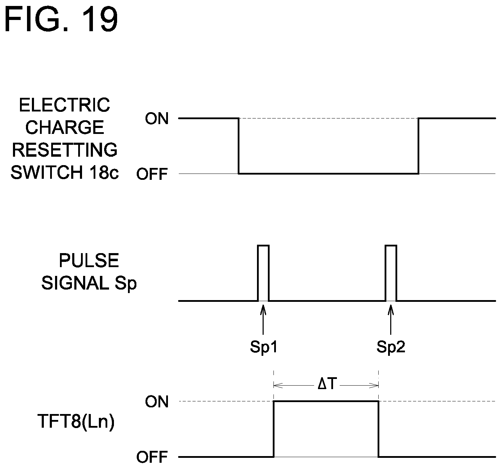

Further, the on/off operation of the electric charge resetting switch 18c of the amplifier circuit 18 of the reading circuit 17 in the process of reading the image data d and transmission of the pulse signals Sp1, Sp2 to the correlated dual sampling circuit 19 are performed in the same manner as the process of reading the image data D shown in Fig. 10. The symbol $\Delta T$ and others shown in Fig. 19 will be described later.

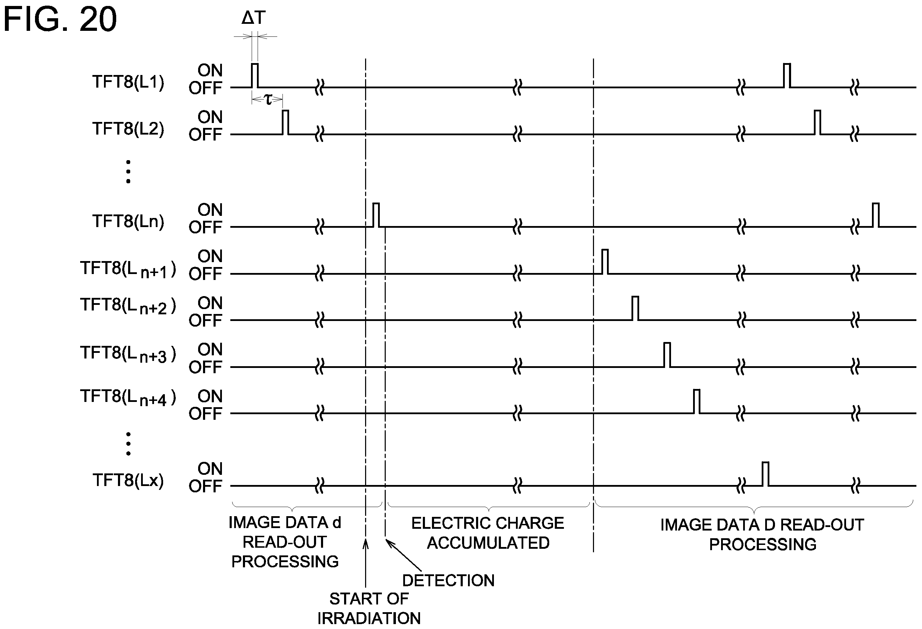

When the structure is so configured that the process of reading the image data d is performed prior to radiographic image capturing operation as described above, if radiation is applied to the radiographic image capturing device 1, as shown in Fig. 20, the image data d read at that moment (image data d read out by application of the on-voltage to the line Ln of the scanning line 5 in Fig. 20) will be much greater than the previously read image data d, similarly to the above-mentioned case of the leak data d leak shown in the Fig. 17.

This problem can be solved by configuring such a structure that the image data d read in the read-out operation prior to radiographic image capturing is monitored by the control means 22 of the radiographic image capturing device 1, and the start of irradiation is detected at the time point when the read-out image data d has exceeded the preset threshold value dth.

In this case, immediately after the start of irradiation has been detected in the manner described above, the control means 22 suspends application of the on-voltage to the scanning lines 5, and allows the off-voltage to be applied to all the lines L1 through Lx of the scanning line 5 from the gate driver 15b so that the TFT's 8 are turned off. The electric charge generated in the radiation detection elements 7 due to irradiation is accumulated in the radiation detection elements 7 so that the electric charge accumulation state is assumed.

After the lapse of a predetermined time subsequent to detection of the start of irradiation, for example, the control means 22 starts application of on-voltage from the scanning line 5 (line Ln+1 of the scanning line 5 in Fig. 20) to which the on-voltage is to be applied next to the scanning line 5 (line Ln of the scanning line 5 in Fig. 20) to which on-voltage has been applied, simultaneously or immediately after the start of irradiation has been detected in the process of reading the image data d prior to radiographic image capturing operation. Thus, the on-voltage is sequentially applied to scanning lines 5 so that the image data D as a final image is read out.

In the case shown in Fig. 20, it is also possible to arrange such a configuration that the process of reading the image data D as a final image can be performed by starting the application of on-voltage from the first line L1 of the scanning line 5, for example. The symbol ΔT and others shown in Fig. 20 will be described later.

[Improved method of detecting the start of irradiation]

In the aforementioned detection method 1, in the operation of resetting the radiation detection elements 7 prior to the radiographic image capturing operation, the leak data d leak value read out in the operation of reading out the first leak data d leak will be increased by prolonging the time duration $\tau$ (Fig. 15 and Fig. 16) from the start of on-voltage to a certain scanning line 5 to the start of on-voltage to the next scanning line 5, and hence by increasing the interval T for sending the second pulse signals Sp1, Sp2 from the control means 22. This procedure improves the sensitivity in detection of the start of irradiation in the radiographic image capturing device 1.

Further, in the aforementioned detection method 2, the image data d value read out in the operation of reading out the first image data d will be increased by prolonging the time duration ΔT (Fig. 19 and Fig. 20) for keeping the TFT's 8 turned on prior to the radiographic image capturing operation, namely, prolonging the time duration ΔT from application of on-voltage to the scanning line 5 through the gate driver 15b of the scanning driving means 15 to application of off-voltage. This procedure improves the sensitivity in detection of the start of irradiation in the radiographic image capturing device 1.

As described above, the method of detecting the start of irradiation in the radiographic image capturing device 1 can be improved in a great number of ways intended to enhance the sensitivity in detection of the start of irradiation in the radiographic image capturing device 1.

[Detection of irradiation termination]

For example, in the aforementioned detection method 1, as shown in Fig. 16, the electric charge accumulation state is assumed by suspending the operation of resetting the radiation detection elements 7 wherein on-voltage is sequentially applied to the scanning lines 5 after detection of the start of irradiation.

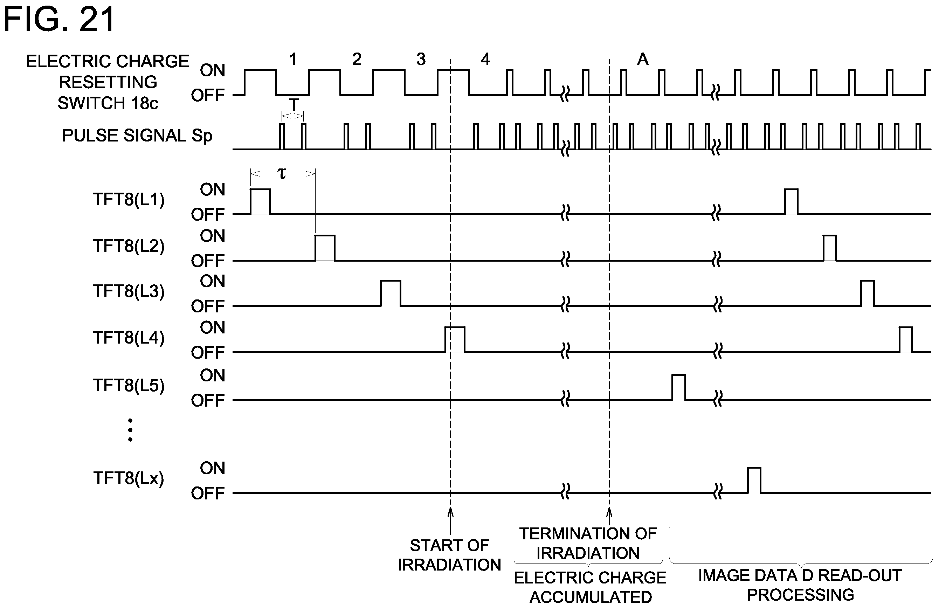

In this case, for example, it is also possible to arrange such a configuration as to continue the process of reading the leak data d leak wherein off-voltage is applied to the scanning lines 5 in the electric charge accumulation state, so that termination of the irradiation on the radiographic image capturing device 1 will be detected, as shown in Fig. 21.

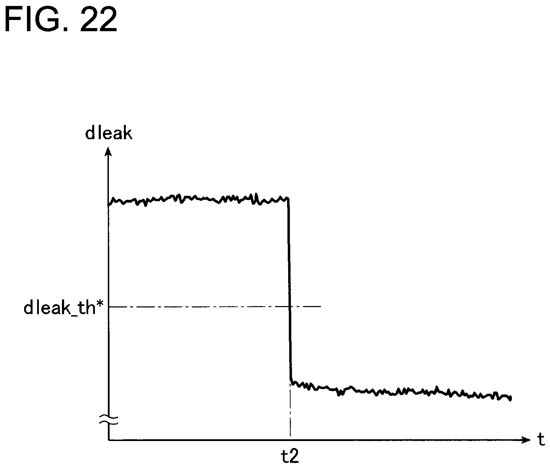

If the structure is so configured as to continue the process of reading the leak data d leak after start of irradiation has been detected, the leak data d leak to be read out assumes a greater value, as shown in Fig. 22, because irradiation is already started in the electric charge accumulation state. However, upon termination of irradiation on the radiographic image capturing device 1, the leak data d leak goes back to the original small value.

Thus, termination of irradiation can be detected when the leak data d leak has been reduced below the threshold value dleak_th* at time t2, for example.

The threshold value dleak_th* in this case can be the same dleak_th value as the threshold value for detecting the start of irradiation according to the aforementioned detection method 1. This value can also be set as a separate value. Further, in Fig. 22, the process of reading the leak data d leak is continued after termination of irradiation has been detected at time t2 so that the leak data d leak is read out. Actually, the process of reading the leak data d leak is suspended after termination of irradiation has been detected, as described below.

It is also possible to arrange such a configuration that, when the leak data d leak has been reduced below the threshold value dleak_th* and termination of irradiation has been detected ("a" in Fig. 21, corresponding to the time t2 of Fig. 22), sequential application of on-voltage to the scanning lines 5 starts and the process of reading the leak data d leak starts, as shown in Fig. 22.

This structure provides the advantage of allowing the process of reading the image data D immediately after termination of irradiation, as shown in Fig. 21, and ensuring earlier start of the processing subsequent to the process of reading the image data D.

It is also possible to arrange such a configuration that the aforementioned detection method 2 is employed to implement the technique of detecting termination of irradiation on the radiographic image capturing device 1 by the process of reading the leak data d leak in the electric charge accumulation state.

[Calculation method for detecting start of irradiation]

Incidentally, the above-mentioned basic control configuration for detecting the start of irradiation, namely, the detection method 1 or detection method 2, enables the radiographic image capturing device 1 itself to detect the start of irradiation.

However, the detection portion P (Fig. 4 and Fig. 7) of the radiographic image capturing device 1 is connected with a few thousands through tens of thousands of signal lines 6. Each of the signal lines 6 is provided with a reading circuit 17. Thus, if the structure is so configured to use the aforementioned detection method 1 or detection method 2 to detect the start of irradiation on the radiographic image capturing device 1, the number of the items of the leak data d leak and image data d to be read out in the first read-out operation will reach a few thousand through tens of thousands.

If the structure is so designed as to determine, for all items of leak data d leak and image data d and for each of the read-out operations, whether or not the threshold value has been exceeded, the processing load will be excessive, and start of irradiation may not be detected on a real-time basis.

If the structure is so configured as to detect the start of irradiation directly using the aforementioned detection method 1 or detection method 2, as described above, many problems will occur. Thus, in the radiographic image capturing device 1 of the present embodiment, the leak data d leak and image data d having been read are further calculated by the mutually differing calculation methods. The start of irradiation is detected when any one of the values calculated by the calculation method has exceeded the threshold value.

The following can be used as the mutually differing calculation method.

The following mainly describes the case of using the above-mentioned detection method 1 wherein the process of reading the leak data d leak is performed prior to the radiographic image capturing operation, and the start of irradiation is detected based on the leak data d leak having been read out. The same description also applies to the case of using the aforementioned detection method 2.

[Calculation method A (average value method)]

This calculation method A is intended to reduce the volume of the data for determining whether or not the threshold value has been exceeded.

In the present embodiment, for example, 128 or 256 reading circuits 17 are built in the reading IC 16 (Fig. 7). To put it another way, one reading IC 16 is connected with 128 or 256 signal lines 6. In a single process of reading the leak data d leak, 128 or 256 items of leak data d leak are read out for each signal line 6 from one reading IC 16.

Assume, for example, that 4096 signal lines 6 are provided and 256 reading circuits 17 are built in one reading IC 16 (i.e., one reading IC 16 is connected with 256 signal lines 6). Then the number of reading IC's 16 is 4096/256 = 16.

Thus, it is possible to make such arrangements that, for example, the total sum, mean value, median value, maximum value and others (hereinafter referred to as "mean value" representing these values) of the leak data d leak outputted from one reading IC 16 are calculated in the first process of reading the leak data d leak, thereby determining whether or not the mean value dleak_ave(z) of the leak data d leak calculated for each reading IC 16 has exceeded the threshold value dthA.

As described above, this calculation method A is designed to calculate the mean value and others of the leak data d leak and others for each reading IC 16. Accordingly, this method may be called an average value method in the following description. The symbol "z" in the description of the aforementioned "mean value dleak_ave(z)" denotes the number of the reading IC 16. Since sixteen reading IC's 16 are provided in the above-mentioned example, "z" assumes the numerals 1 through 16.

If this calculation method A (average value method) is adopted in the structural configuration, the control means 22 of the radiographic image capturing device 1 is not required to determine whether or not the threshold value dthA has been exceeded or not, for 4096 items of leak data d leak read out in the first process of reading the leak data d leak, in terms of the above-mentioned example. The control means 22 is only required to determine if the threshold value dthA has been exceeded or not, for sixteen items of mean value dleak_ave(z) for each reading IC 16, of the leak data d leak outputted from each reading IC 16. This arrangement reduces the load in determining start of irradiation on the radiographic image capturing device 1.

In this case, the threshold value dthA can be set to the same value as the above-mentioned threshold value dleak_th (Fig. 17). It is also possible to configure the structure so that the value of the threshold value dthA can be set for each reading IC 16.

[Calculation method B (difference method)]

To reduce the load in decision processing, it is also possible to adopt such a structure that the maximum value is extracted out of sixteen items of mean value dleak_ave(z) calculated from the leak data d leak outputted from one reading IC 16 in the first process of reading the leak data d leak, as described above, thereby determining whether or not the maximum value has exceeded the threshold value.

In this case, however, a problem may be found in the data reading efficiency in each reading circuit 17 in each reading IC 16.

To be more specific, the data reading efficiency in each reading circuit 17 (Fig. 7 and others) normally differs according to the reading circuit 17. Even if the total sum of the electric charge q (Fig. 13) leaking to the signal line 6 from the radiation detection elements 7 is the same for all signal lines 6, the leak data d leak having a value always greater than those of other reading circuits 17 are read in some reading circuits 17, and the leak data d leak having a value always smaller than those of other reading circuits 17 are read in other reading circuits 17.

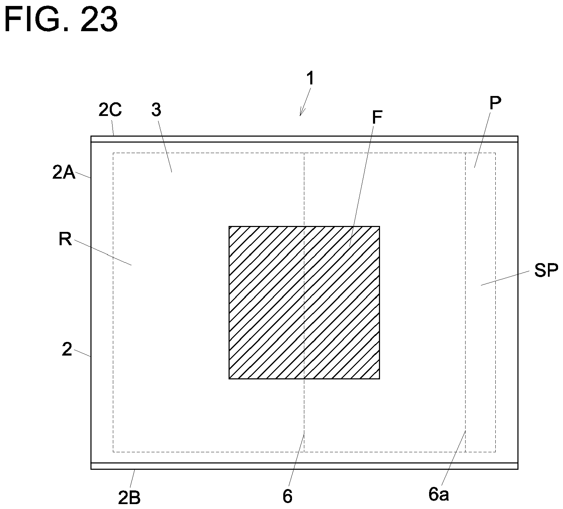

Under such conditions, assume, for example, the case wherein the radiation is applied to the radiographic image capturing device 1 with the radiation field F confined to the center of the detection portion P, as shown in Fig. 23, and the signal line 6a connected to the reading circuit 17 for reaching the leak data d leak always having the value greater than those of other reading circuits 17 is located outside the radiation field F.

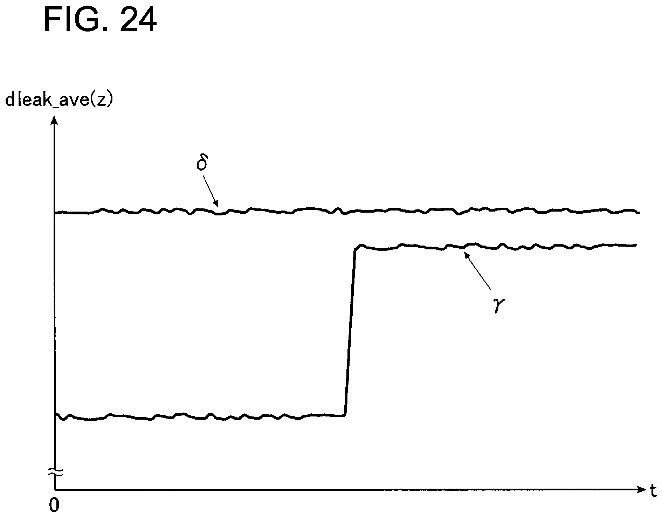

In this case, as shown in Fig. 24, it may happen that, even if the mean value dleak_ave(z) ($\gamma$ of the drawing) of the leak data d leak outputted from the reading IC 16 including the reading circuit 17 connected to the signal line 6 located inside the radiation field F has increased over the level of the irradiation, it does not exceed the mean value dleak_ave(z) ($\delta$ of the drawing) of the leak data d leak outputted from the reading IC 16 including the reading circuit IC 17 connected to the signal line 6a located outside the radiation field F, in some cases.

In this case, if the maximum value is extracted out of the sixteen items of mean value dleak_ave(z) calculated from the leak data d leak outputted from one reading IC 16 in the first process of reading the leak data d leak, the mean value dleak_ave(z) of the leak data d leak indicated by $\delta$ in the drawing will be extracted. Since the mean value dleak_ave(z) of the extracted leak data d leak is not affected by irradiation, the threshold value is not exceeded, and detection of irradiation fails.

To solve this problem, it is possible to arrange such a configuration that the moving average of the mean value dleak_ave(z) of the leak data d leak outputted from each reading IC 16 for each reading operation is calculated for each reading IC 16, for example.

To be more specific, for each calculation of the mean value dleak_ave(z) of the leak data d leak outputted from the reading IC 16 for each process of reading the leak data d leak, a step is taken to calculate the average (i.e., moving average) of the mean value dleak_ave(z) of the leak data d leak for each reading IC 16, calculated in several previous reading operations including the reading operation immediately before the current reading operation.

The arrangement is so configured as to calculate, for each reading IC 16, the difference $\Delta$d between the mean value dleak_ave(z) of the leak data d leak calculated in this reading operation and the calculated moving average.

It is also possible to arrange such a configuration that the difference $\Delta$d between the mean value dleak_ave(z) calculated from the leak data d leak outputted from the reading IC 16 in the first process of reading the leak data d leak, and the corresponding moving average is calculated for each reading IC 16. The maximum value is extracted out of the calculated differences $\Delta$d (sixteen differences $\Delta$d in the above-mentioned example). This is followed by the step of determining whether or not the maximum value of the difference $\Delta$d has exceeded the threshold value dthB.

This calculation method B calculates the difference $\Delta$d obtained by subtracting the corresponding moving average out of the mean values of the leak data d leak and others for each reading IC 16, as described above. This may be called the difference method in the following description.

Even if there are variations in the reading efficiency for each reading circuit 17 installed in the reading IC 16, the aforementioned configuration ensures variations in reading efficiency to be offset by calculating the difference $\Delta$d between the mean value dleak_ave(z) of the leak data d leak read out at the same reading efficiency and the moving average.

Thus, the above-mentioned difference $\Delta$d becomes the value that simply reflects, for each reading IC 16, whether or not the mean value dleak_ave(z) of the leak data d leak has increased from the past data level. If the structure is configured in such a way that the start of irradiation is detected on the basis thereof, it becomes possible to prevent the problems of Fig. 24 from occurring.

In this case, when radiation is not applied to the radiographic image capturing device 1, the leak data d leak having been read out and the moving average value are almost the same with each other. Accordingly, the difference $\Delta$d is almost zero (0). In the meantime, if radiation is applied to the radiographic image capturing device 1, the difference $\Delta$d wherein the value of the read-out leak data d leak is much increased over the moving average value is a positive value significantly different from zero (0).

Thus, the threshold value dthB is set to a value that clearly distinguishes between the difference $\Delta$d that assumes almost zero (0) when the radiographic image capturing device 1 is not exposed to radiation, and the difference $\Delta$d that assumes a positive value significantly different from zero (0) when the radiographic image capturing device 1 is exposed to radiation.

[Calculation method C (Max-Min method)]

Calculation is made to find out the difference $\Delta d$ between the sixteen items of mean value dleak_ave(z) calculated from the leak data d leak outputted from one reading IC 16 in the first process of reading the leak data d leak, and corresponding moving average values, as described above.

It is also possible to arrange such a configuration that not only the maximum value but also the minimum value are extracted from the calculated difference $\Delta d$, thereby determining whether or not the difference $\delta d$ between the maximum value and minimum value of the difference $\Delta d$ has exceeded the threshold value dthC.

This calculation method C is used to calculate the difference $\delta d$ between the maximum value (i.e., Max) and the minimum value (i.e., Min) of the difference $\Delta d$ obtained by subtracting the moving average from the mean value of the leak data d leak and others for each reading IC 16, as described above. Accordingly, the method C may be called the Max-Min method in the following description.

In this case as well, the threshold value dthC is set to a value that clearly distinguishes the differences $\delta d$ that may change depending on whether the radiographic image capturing device 1 is exposed to radiation or not.

[Calculation method D (accumulation method)]

When there is very small dosage of the radiation applied to the radiographic image capturing device 1 from the radiation generator 52, there may be a reduction in the mean value dleak_ave(z) of the leak data d leak for each reading IC 16 calculated according to the aforementioned calculation method A (average value method). The mean value dleak_ave(z) may not exceed the threshold value dthA in some cases, even when radiation is applied.

Similarly, when the calculation method B (difference method) or calculation method C (Max-Min method) is adopted, there may be reduction in the difference $\Delta d$ (calculation method B) between the mean value dleak_ave(z) of the leak data d leak for each reading IC 16 and the moving average, and in the difference (calculation method C) between the maximum and the minimum values of the difference $\Delta d$. These values may not exceed the threshold values dthB, dthC in some cases even if radiation is applied.

If the above-mentioned case occurs, radiographic image capturing device 1 will fail to detect the start of irradiation when the radiographic image capturing device 1 is exposed to radiation from the radiation generator 52.

This problem can be solved, for example, by calculating the chronologically accumulated value (also called an integral) $\Sigma\Delta d$ in the difference $\Delta d$ (the aforementioned calculation method B (difference method)) between the mean value dleak_ave(z) of the leak data d leak and the moving average for each reading IC 16. This is followed by the step of determining whether or not this accumulated value $\Sigma\Delta d$ has exceeded the threshold value dthD.

As described above, this calculation method D provides a means for chronological integration of the difference $\Delta d$ obtained by subtracting the moving average from the mean value of the leak data d leak or others for each reading IC 16. Accordingly, the method D may be called the accumulation method in the following description.

If this configuration is adopted, there is a fluctuation in the mean value dleak_ave(z) of the leak data d leak while the radiographic image capturing device 1 is not exposed to radiation, so that the mean value dleak_ave(z) is increased over or reduced below the moving average. This accumulated value $\Sigma\Delta d$ of the difference $\Delta d$ undergoes changes, assuming a value close to zero (0).

However, when irradiation on the radiographic image capturing device 1 has started, the mean value dleak_ave(z) of the leak data d leak becomes greater than the moving average value. These differences $\Delta d$ assume positive values in many cases.

Thus, when the aforementioned configuration is adopted, the accumulated value $\Sigma\Delta d$ does not exceed the threshold value dthD, as long as the radiographic image capturing device 1 is not exposed to the radiation. However, once irradiation has started, there will be an increase in the accumulated value $\Sigma\Delta d$ and the threshold value dthD will be exceeded. Thus, use of the aforementioned configuration ensures accurate detection of the start of irradiation on the radiographic image capturing device 1, even when a very small dosage of radiation is applied to the radiographic image capturing device 1 from the radiation generator 52.

In this case, as described above, the threshold value dthD is set to the value that is clearly distinguished between the accumulated value $\Sigma\Delta d$ that undergoes changes assuming a value close to zero (0) without the radiographic image capturing device 1 being exposed to radiation, and the accumulated value $\Sigma\Delta d$ which increases with the start of irradiation.

In the present embodiment, the calculation method D (accumulation method) is used for each reading IC 16, and is set so that the threshold value dthD is set for each reading IC 16.

[Detection by control means in the present embodiment]

In the present embodiment, as described above, when the leak data d leak for (detection method 1) or image data d (for detection method 2) is read out in the read-out operation performed prior to the radiographic image capturing operation, the control means 22 of the radiographic image capturing device 1 allows the aforementioned values (i.e., mean value dleak_ave(z), difference $\Delta$d, difference $\delta$d, accumulated value $\Sigma\Delta$d) to be calculated by concurrent processing according to the aforementioned mutually differing calculation methods A through D.

When any one of the values calculated according to each of the calculation methods A through D has exceeded the corresponding threshold value, the start of irradiation is detected. Having detected the start of irradiation, the control means 22 suspends all the calculations according to calculation methods A through D. As shown in Fig. 16 and Fig. 20, off-voltage is applied to all the lines L1 through Lx of the scanning line 5 from the gate driver 15b at this time point, and the electric charge accumulation state is assumed.

The control means 22 ensures that the information on the calculating method used to calculate the value used to detect the start of irradiation is sent simultaneously as the image data D and others are sent to the console 58 as an image processing device.

To be more specific, for example, when the start of irradiation has been detected based on the finding that the mean value dleak_ave(z) of the leak data d leak obtained by calculation according to the calculation method A (average value method) has exceeded the corresponding threshold value dthA, the control means 22 sends the information based on the calculation method A to the console 58.

As described above, in the present embodiment, the aforementioned calculation methods A through D are adopted as mutually differing calculation methods. However, two or three of the calculation methods A through D or a calculation method other than the aforementioned calculation methods A through D can be used as the mutually differing calculation methods. This description also applies to the following description.

[Acquisition of offset data]

The following describes the offset data O read-out operation to be performed by the radiographic image capturing device 1.

As shown in Fig. 16 and Fig. 20, when the control means 22 of the radiographic image capturing device 1 has detected the start of irradiation in the aforementioned procedure, the control means 22 allows off-voltage to be applied to all the lines L1 through Lx of the scanning line 5 from the gate driver 15b so that the electric charge accumulation state is assumed After that, the on-voltage is sequentially applied to the scanning lines 5, and the image data D as a final image is read out.

In this case, a so-called dark electric charge constant occurs in the radiation detection element 7 due to thermal excitation or the like caused by the heat (high-temperature) of the radiation detection element 7 itself The offset caused by the dark electric charge is superimposed on the image data D read out in the above-mentioned process of reading the image data D.

Thus, in the process of generating a radiographic image based on the image data D on the console 58 as an image processing device, the offset caused by the dark electric charge is subtracted from the image data D, and the true image data (hereinafter referred to as "true image data D*") is calculated only according to the electric charge generated in the radiation detection elements 7 by irradiation. The radiographic image is generated based on this true image data D*

The process of acquiring as offset data O the offset caused by the dark electric charge superimposed on the image data D is performed in the radiographic image capturing device 1 normally before and after radiographic image capturing operation. In the present embodiment, the control means 22 repeats a series of processing sequences up to the image data D read-out processing (Fig. 16), thereby performing the process of reading the image data.

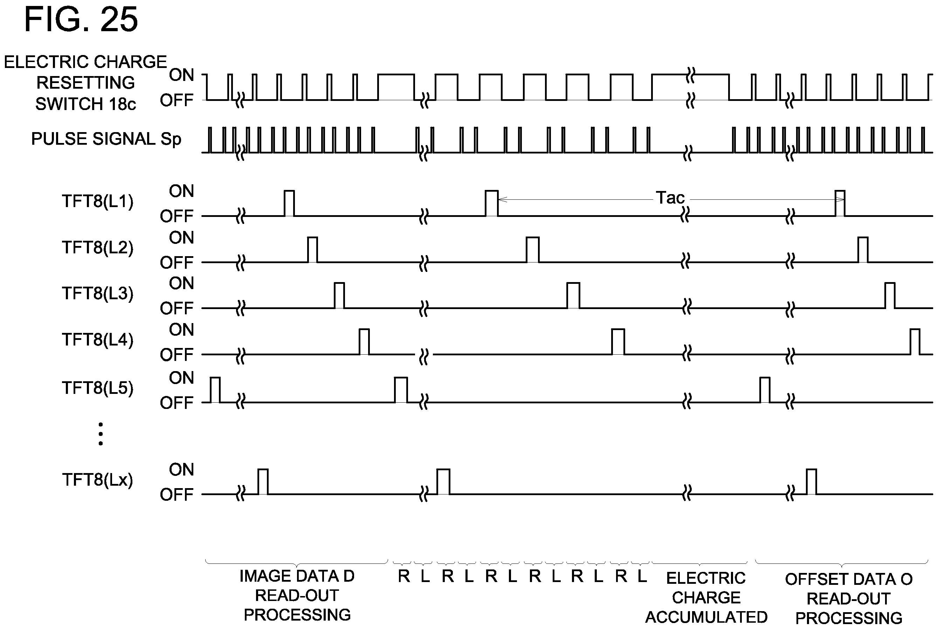

To be more specific, for example, when the aforementioned detection method 1 is adopted, after the process of reading the image data D, the control means 22 repeats a series of processing sequences including repetition of the process of reading the leak data d leak prior to the radiographic image capturing operation shown in Fig. 16 and the process of resetting the radiation detection elements 7, assumption of electric charge accumulation state, and the process of reading the image data D, as shown in Fig. 25, whereby the offset data O is read out.

In the electric charge accumulation state during the process of reading the offset data O, only the dark electric charge is accumulated in the radiation detection elements 7. Accordingly, the radiographic image capturing device 1 is not exposed to radiation. This eliminates the need of performing the process of reading the leak data d leak and the process of resetting the radiation detection elements 7 on an alternate basis, subsequent to the process of reading the image data D, prior to shift to the electric charge accumulation state for the offset data O, as shown in Fig. 25. This makes it possible to configure such a structure as to perform only the process of resetting the radiation detection elements 7, without performing the process of reading the leak data d leak.

In Fig. 25, the process of resetting the radiation detection elements 7 (i.e., the process of resetting wherein on-voltage is sequentially applied to the line Ln+1 through Lx, L1 through Ln of the scanning line 5) is performed once after the process of reading the image data D. The structure can be configured so that the process of resetting the radiation detection elements 7 is performed several times.

The volume of the dark electric charge accumulated in the radiation detection elements 7 increases in proportion to the time duration when the TFT's 8 connected to the radiation detection element 7 is kept turned off, i.e., time Tac in Fig. 16 (the time Tac in Fig. 16 is referred to as effective accumulation time Tac in the following description). The accumulated dark electric charge is read out as offset data O. The magnitude of the offset data O varies according to the time duration when the TFT's 8 are kept turned off, i.e., the effective accumulation time Tac in Fig. 25.

In this case, as described above, assuming that processing sequence up to the process of reading the image data D as a final image and processing sequence up to the process of reading the offset data O are the same, the effective accumulation time Tac (Fig. 25) when the TFT's 8 are kept turned off during the process of reading the offset data O will be the same as the effective accumulation time Tac (Fig. 16) in the process of reading the image data D as a final image.

Accordingly, the offset caused by the dark electric change superimposed on the image data D assumes the same value as the offset data O as the value read out in the process of reading the offset data O. Thus, the true image data D* based on the electric charge generated in the radiation detection elements 7 by irradiation can be calculated by subtracting the offset data O from the image data D.

Having read out the image data D as a final image in the above-mentioned procedure, the control means 22 of the radiographic image capturing device 1 sends the read-out image data D to the console 58. When the process of reading the offset data O has been performed in the above-mentioned manner, the control means 22 sends the read-out offset data O to the console 58.

[Process of correcting the linear defect in image processing device]

The following describes the process of correcting the linear defect to be performed prior to the process of generating a radiographic image based on the image data D and others, using the console 58 as an image processing device. The operation of the radiographic image capturing system 50 of the present embodiment will also be described.

In the present embodiment, subsequent to the process of correcting the linear defect, the console 58 applies prescribed image processing such as gain correction, faulty pixel correction or gradation processing to the corrected image data (i.e., true image data will be described later), thereby generating a radiographic image. The prescribed image processing pertains to a conventionally known technique and will not be described.

In the present embodiment, as described above, the console 58 performs the function of the image processing device. An image processing device can be installed separately from the console 58.

The following briefly describes the mechanism that causes generation of a linear defect in the image data D.

For example, in the detection method 2, start of irradiation is detected based on the increase in the volume of image data d having been read out, as described above. The increase in the volume of image data d having been read out signifies that part of the useful electric charge generated in the radiation detection elements 7 by irradiation, i.e., part of the electric charge to be read out as the image data D as a final image has been lost as image data d from radiation detection elements 7, prior to the radiographic image capturing operation.

To be more specific, in terms of the example illustrated in Fig. 20, when on-voltage is applied to the line Ln of the scanning line 5, the start of irradiation is detected. This means that, as viewed from the radiation detection elements 7 connected to the line Ln of the scanning line 5, part of the useful electric charge generated in the radiation detection elements 7 by irradiation has been lost.

This means that a defect in part of the useful electric charge has occurred to the image data D read out of the radiation detection elements 7 connected to the line Ln of the scanning line 5 in the later process of reading the image data D as a final image. To be more specific, this image data D has a value smaller than the original level. For example, as shown in Fig. 26, a line of the image data D containing a defect has appeared on the potion, corresponding to the line Ln of the scanning line 5, of the image data D (or in the radiographic image generated based thereon), i.e., a linear defect.

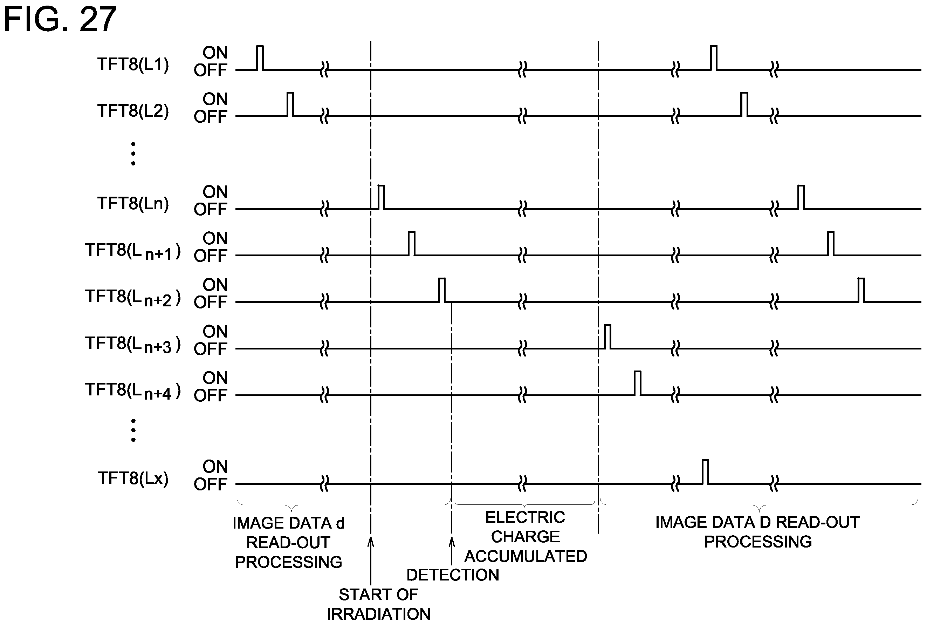

As shown in Fig. 27, if much time is required from the actual start of irradiation on the radiographic image capturing device 1 from the radiation generator 52 to the detection of the start of irradiation by the radiographic image capturing device 1, the process of reading the image data d may have been repeated several times during this time.

For example, as shown in Fig. 27, if irradiation from the radiation generator 52 has started when the process of reading the image data d is performed by application of on-voltage to the line Ln of the scanning line 5 in the process of reading the image data d prior to the radiographic image capturing operation, and start of irradiation has been detected in the process of reading the image data d by application of on-voltage to the line Ln+2 of the scanning line 5, a defect occurs to the image data D read out of the radiation detection elements 7 connected with the line Ln through Ln+2 of the scanning line 5 as shown in Fig. 28.

As described above, if much time is required from the actual start of irradiation on the radiographic image capturing device 1 from the radiation generator 52 to the detection of the start of irradiation by the radiographic image capturing device 1, there will be a continuous occurrence of linear defects.

In the meantime, the aforementioned linear defect also appears when the aforementioned detection method 1 is adopted. To be more specific, for example, when the start of irradiation has been detected at the time interval shown in Fig. 16, in the line L4 of the scanning line 5 wherein the process of resetting the radiation detection elements 7 has been performed immediately before the fourth process of reading the leak data d leak, part of the useful electric charge generated inside the radiation detection elements 7 by irradiation may have been lost from the radiation detection elements 7 connected to this scanning line 5 by the resetting operation.

Thus, in the scanning line 5 wherein the resetting operation has been performed by application of on-voltage immediately before the process of reading the leak data d leak wherein start of irradiation is detected, a defect may have occurred to part of the useful electric charge, on the image data D read out of the radiation detection elements 7 connected to this scanning line 5.

Thus, when the aforementioned detection method 1 is adopted, a linear defect shown in Fig. 26 may also occur to the image data D read out of the radiation detection elements 7 connected to the scanning line 5 by application of on-voltage in the process of resetting immediately before the process of reading the leak data d leak wherein start of irradiation is detected.

Further, if much time is required from the actual start of irradiation on the radiographic image capturing device 1 from the radiation generator 52 to the detection of the start of irradiation by the radiographic image capturing device 1, the process of resetting the radiation detection elements 7 to be performed alternately with the process of reading the leak data d leak may be performed several times during this time.

In this case, a defect also occurs to the image data D read out of the radiation detection elements 7 connected to a plurality of scanning lines 5. Linear defects occur on a continuous basis, as shown in Fig. 28.

When the detection method 1 or detection method 2 is to be adopted, the linear defect occurring in the image data D must be repaired by the console 58 as an image processing device, as illustrated in Fig. 26 or Fig. 28.

In this case, the radiographic image capturing device 1 itself is unable to identify the time when the radiographic image capturing device 1 is exposed to the radiation from the radiation generator 52.

To be more specific, for example, in terms of the example of Fig. 27, the radiographic image capturing device 1 cannot identify the start of irradiation from the radiation generator 52 when the process of reading the image data d is performed by application of on-voltage to the line Ln of the scanning line 5 in the process of reading the image data d, prior to the radiographic image capturing operation.

The radiographic image capturing device 1 itself detects the start of irradiation simply based on the image data d having been read in the process of reading the image data d performed by application of on-voltage to the line Ln+2 of the scanning line 5. This applies to the case when the detection method 1 is adopted.

In the present embodiment, using the aforementioned mechanism that causes generation of a linear defect in the image data D as a final image, the console 58 as the image processing device identifies the range of the image data D containing a defect according to the information on the calculation method transmitted from the radiographic image capturing device 1, and recovers the image data D having been identified, according to the recovery method corresponding to the calculation method.

The following describes how the calculated values (i.e., mean value dleak_ave(z), difference $\Delta d$, difference $\delta d$, accumulated value $\Sigma\Delta d$) are subjected to changes before and after the start of irradiation on the radiographic image capturing device 1 in the above-mentioned calculation methods A through D.

Fig. 29 through Fig. 32 show that irradiation from the radiation generator 52 starts at time T1, and terminates at time T2.

For example, when the mean value dleak_ave(z) of the leak data d leak is to be calculated for each reading IC 16 by the calculation method A (average value method), the mean value dleak_ave(z) of the leak data d leak exhibits an abrupt rise at time T1 when irradiation starts from the radiation generator 52, for example, as shown in Fig. 29. This value then exceeds the threshold value dthA preset for the calculation method A.

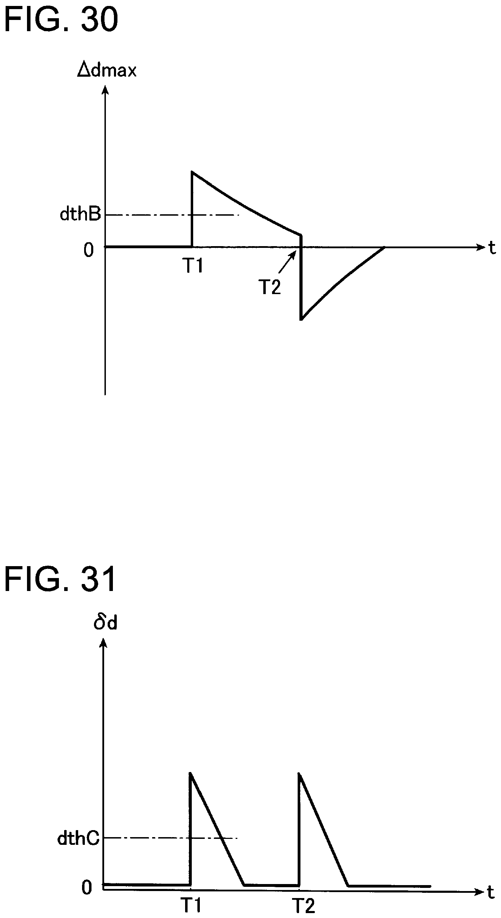

For example, when the difference $\Delta d$ between the mean value dleak_ave(z) of the leak data d leak for each reading IC 16 and the moving average by the calculation method B (difference method) is to be calculated, the maximum value $\Delta dmax$ extracted from differences $\Delta d$ also exhibits an abrupt rise at time T1 when irradiation starts from the radiation generator 52, for example, as shown in Fig. 30. This value then exceeds the threshold value dthB preset for the calculation method B.

For example, when calculating the difference $\delta d$ by extraction of the maximum and minimum values out of the differences $\Delta d$ calculated for each reading IC 16 by the calculation method C (Max-Min method) in the above-mentioned procedure, the calculated difference $\delta d$ also exhibits an abrupt rise at time T1 when irradiation starts from the radiation generator 52, for example, as shown in Fig. 31. This value then exceeds the threshold value dthC preset for the calculation method C.

Thus, when these calculation methods A through C are used, the time when irradiation from the radiation generator 52 starts is the same as the time when start of irradiation is detected by the radiographic image capturing device 1, as shown in the examples of Fig. 16 and Fig. 20, with the result that the number of linear defects that occur is one or at most two, as shown in Fig. 26.

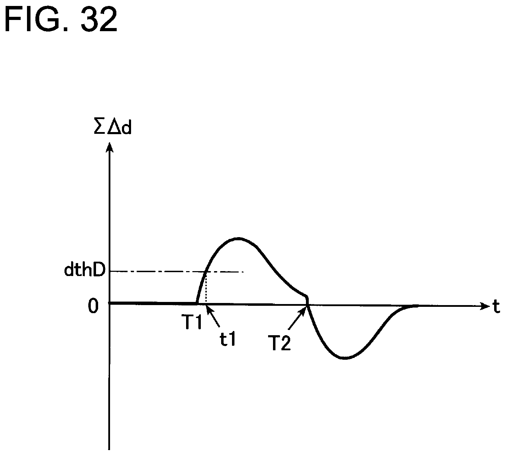

By contrast, for example, when calculating the chronologically accumulated value $\Sigma\Delta d$ calculated for each reading IC 16 in the above-mentioned procedure by the calculation method D (accumulation method), the calculated accumulated value $\Sigma\Delta d$ starts to increase from the time T1 when irradiation starts from the radiation generator 52, for example, as shown in Fig. 32. The value exceeds the threshold value dthD preset for the calculation method D only when the time T1 has been reached.

In the case of this calculation method D, the start of irradiation from the radiation generator 52 occurs later than the detection of start of irradiation by the radiographic image capturing device 1, as shown in Fig. 27. Thus, a plurality of linear defects appear on a continuous basis, as shown in Fig. 28

In the present embodiment, the console 58 as an image processing device uses a different method to correct the image data D depending on whether the information on calculation method sent from the radiographic image capturing device 1 is any one of the calculation methods A through C used for detection of the start of irradiation, or the calculation method D.

In the present embodiment, if start of irradiation is detected both by any one of the calculation methods A through C and by the calculation method D simultaneously, a plurality of linear defects may occur on a continuous basis. To prevent this, the image data D is recovered by the method for recovery when calculation method D has been used, as will be described later.

[When one of the calculation methods A through C is used to detect the start of irradiation]

When one of the calculation methods A through C is used to detect the start of irradiation, there will be a very short response time from the start of irradiation on the radiographic image capturing device 1 from the radiation generator 52, to the detection of the start of irradiation by the radiographic image capturing device 1, as described above.

This reduces the number of occurring linear defects to one or two. To be more specific, in this case, the range of the image data D containing a defect is restricted to the range of one or two scanning lines. 5 including the scanning line 5 with on-voltage applies thereto, in the process of resetting the radiation detection elements 7 (for detecting means 1) wherein the process of reading the image data d (for detecting means 2) and the process of reading the leak data d leak are performed on an alternate basis, when the start of irradiation has been detected by the control means 22 of the radiographic image capturing device 1.

In such a case, in the present embodiment, the console 58 as an image processing device disables the image data D (i.e., image data D containing a linear defect) containing a defect.

The disabled image data D is recovered by interpolation based on the value of the image data D read out of the radiation detection elements 7 connected to the scanning line 5 (for example, line Ln-1, Ln+1 of the scanning line 5 in the example of Fig. 26) adjacent to scanning line 5 (for example, the line Ln of the scanning line 5 in the example of Fig. 26) connected with the radiation detection elements 7 of the radiographic image capturing device 1 from which the image data D containing a defect has been read out.

To be more specific, in terms of the example of Fig. 26, the image data D of the line Ln of the scanning line 5 is interpolated, for example, by the method of linear interpolation, using the image data D of the lines Ln-1, Ln+1 of the scanning line 5 adjacent to the upper and lower sides in the drawing. Thus, the disabled image data D of the line Ln of the scanning line 5 is recovered using the image data D of the lines Ln-1, Ln+1 of the scanning line 5.

In the aforementioned description, for example, the disabled image data D of the line Ln of the scanning line 5 is recovered by interpolation using the image data D of the lines Ln-1, Ln+1 of the scanning line 5. However, it is also possible to arrange such a configuration, as described below, that the true image data D* instead of image data D is calculated and interpolation is performed using the true image data D* of the lines Ln-1, Ln+1 of the scanning line 5, for example, so as to recover the true image data D* of the line Ln of the scanning line 5 having been disabled, as shown below.

[When calculation method D is used to detect the start of irradiation]

In the meantime, when calculation method D (accumulation method) is used to detect the start of irradiation, there is a longer response time from the start of irradiation on the radiographic image capturing device 1 from the radiation generator 52, to the detection of the start of irradiation by the radiographic image capturing device 1, as described above. This produces a plurality of continuous linear defects. Several tens or more linear defects may appear on a continuous basis in some cases.

In such a case, the following problem will occur if the image data D containing a defect is disabled as in the above-mentioned manner and an attempt is made to recover the data by interpolation using the adjacent image data D.

For example, when the generated radiographic image is to be used for medical examination and the image of a lesion is included in the portions of a plurality of continuous linear defects, the image data D containing the defect will be disabled. The image data D carrying the information on the lesion will also be disabled and discarded.

If the disabled image data D is recovered by interpolation using the adjacent image data D without carrying any information on the lesion, the information on the lesion that should be included in the image of the linear defect will disappear from the recovered image data D or radiographic image generated based thereon.

In the present embodiment, the console 58 as an image processing device recovers the image data D containing the defect without disabling the image data D containing a linear defect, based on the value of the image data D (same as the true image data D* in the present embodiment, as will be described later, same for the rest) itself, using the following procedure.

In this case, in the present embodiment, the profile of the console 58 as an image processing device image data D (true image data D* in the present embodiment, same for the rest) is analyzed to specify the range of the image data D containing the defect, using the following procedure. The console 58 then recovers the image data D in the range specified as containing a defect.

The following describes the process of correcting the linear defect in the image data D when a long response time is required as when the above-mentioned calculation method D (accumulation method) is used, namely, when many linear defects have occurred on a continuous basis.

In the present embodiment, instead of processing the image data D itself as a final image, a step is taken to calculate the true image data D* from the image data D and offset data O corresponding thereto, and to analyze the profile of the calculated true image data D*, thereby specifying the range of the image data D containing the defect.

As described above, the image data D contains the offset caused by dark electric charge. This may cause variations in the value of image data D in many cases. If an attempt is made to specify the aforementioned range based on the image data D containing such variations, the range may not be specified appropriately.

The console 58 as an image processing device ensures that the true image data D* that corresponds only to the electric charge having occurred in the radiation detection elements 7 by irradiation and does not include a dark electric charge is calculated for each radiation detection element 7, based on the image data D subsequent to radiographic image capturing operation transmitted from the radiographic image capturing device 1, and the offset correction value O, according to the following formula (1):

$$D^* = D\text{-}O \ldots (1)$$

If there is not much variation in the image data D itself, it is possible to arrange such a configuration that the image data D itself without the offset data O being subtracted is subjected to recovery processing.

The console 58 then analyzes the profile of the true image data D* formed when plotting the calculated true image data D* arranged along the extension of signal line 6 (Fig. 4, Fig. 7 and others) of the radiographic image capturing device 1 corresponding to the true image data D*, and specifies the range of the true image data D* containing a defect.

Here, (m, n) will be employed to represent the radiation detection elements 7, using the line number m of the signal line 6 connected with the relevant radiation detection element 7, and line number n of the scanning line 5. D*(m, n) will be used to represent the true image data D* calculated from the image data D read out of the radiation detection elements (m, n).

The true image data D*(M, n) is extracted from the true image data D*(m, n) calculated in the above-mentioned procedure, wherein the true image data D*(M, n) is calculated based on the image data D and others read out of the radiation detection elements (M, n) connected to a certain signal line 6 (wherein the line number of this signal line 6 is defined as "M").

The profile of the true image data D*(M, n) is obtained by plotting the extracted true image data D*(M, n) according to the order of the line number n of the scanning line 5. This is the profile of the true image data D*(M, n) along the extension of the signal line 6, regarding the signal line 6 of the line number M of the radiographic image capturing device 1.

The console 58 analyzes the profile of the true image data D* in this manner and specifies the range of the true image data D* (i.e., range of the linear defect) containing a defect

However, variations may also occur to the true image data D* in the above-mentioned procedure. If the extracted true image data D*(M, n) is plotted according to the order of the line number n of the scanning line 5, variations will also occur to the profile. The appropriate specification of the range may fail by an attempt to specify the above-mentioned range based on the profile.

In the present embodiment, therefore, in the above-mentioned procedure, the calculated true image data D*(m, n) is calculated for each mean value D*ave(n) of the true image data D*(m, n) arranged along the extension of the scanning line 5 of the radiographic image capturing device 1, namely, the scanning line 5 of the mean value D*ave(n) of the true image data D*(m, n) having the line number n of the same scanning line 5.

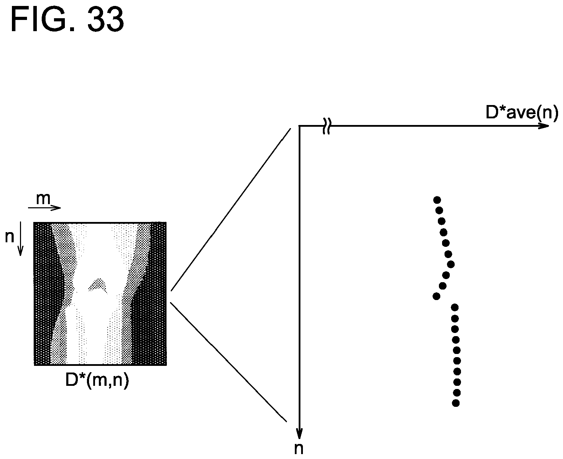

As described above, using the same procedure as the above, the range of the true image data D* containing a defect is specified by analyzing the profile of the mean value D*ave(n) formed when having arranged this mean value D*ave(n) along the direction of the signal line 6 of the radiographic image capturing device 1 and having plotted this mean value D*ave(n), as shown in Fig. 33.

The same procedure as the above is preferably used when analyzing the profile of the image data D itself, not the true image data D*. Namely, it is preferred to form a profile by calculating the mean value Dave(n) of the image data D(m, n) of the line number n of the same scanning line 5 for each scanning line 5.

As described above, when the mean value D*ave(n) of the true image data D*(m, n) (or image data D(m, n), same for the rest) has been calculated for each scanning line 5, variations of the true image data D*(m, n) are offset. Thus, as shown in Fig. 33, a profile with the minimum variation is obtained. This ensures a precise specification of the range of the true image data D* containing a defect.

In the chart on the right of Fig. 33, only the profile of the mean value D*ave(n) close to the range of the true image data D* containing a defect is shown in an enlarged view. Further, when specifying the range of the true image data D* containing a defect through analysis of the profile of the mean value D*ave(n), the following points are preferably noted.

The true image data D*, corresponding to the radiation detection element 7, of the portion of the radiation having directly reached the radiographic image capturing device 1 without passing through the subject, has a value close to the upper limit that can be assumed by the true image data D*. By contrast, the true image data D* for the portion wherein the subject image is captured is normally smaller than that.

In the present embodiment, the electric charge in a volume greater than the maximum volume of the electric charge that can be read out by the reading circuit 17 (Fig. 7 and Fig. 8) can be accumulated in the radiation detection element 7.

As described above, even if part of the electric charge has flown out of the radiation detection element 7 in the process of resetting (for detection method 1) prior to the radiographic image capturing operation, or in the process of reading the image data d (for detection method 2), a great volume of electric charge is later produced in the radiation detection element 7 in the radiation detection element 7 which radiation has reached without passing through the subject Thus, the electric charge in the volume greater than the maximum volume of the electric charge that can be read out by the reading circuit 17 can be accumulated in the radiation detection element 7.

Thus, in the radiation detection element 7 directly reached by radiation, even if there is an outflow of part of the electric charge from the radiation detection element 7 in the process of resetting or others prior to the radiographic image capturing operation, the image data D to be read may be equal to or close to the upper limit value that can be outputted from the reading circuit 17 in some cases.

To be more specific, in the radiation detection element 7 directly reached by radiation, even if there is an outflow of part of the electric charge from the radiation detection element 7 in the process of resetting or others prior to the radiographic image capturing operation, the image data D having a great value free from defects may be read out in some cases, as far as the image data D to be read is concerned.

Thus, the true image data D* calculated from such image data D may have a value close to the upper limit value that can be assumed by the true image data D*, and the true image data D* may take a greater value free from any defects in some cases.

If the true image data D*(m, n) having a greater value free from any defects is included in the scope for calculation of the mean value D*ave(n) for each scanning line 5 of the true image data D*(m, n) as described above, a serious impact will be given to the true image data D*(m, n) having a greater value free from any defects.

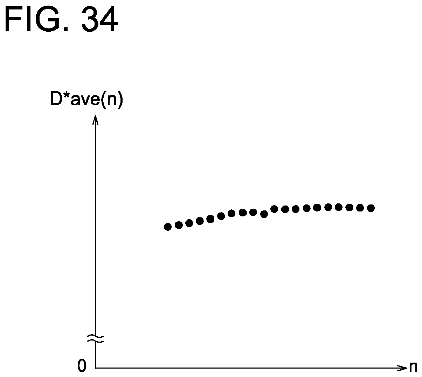

The profile of the mean value D*ave(n) for each scanning line 5 may become a profile wherein the range of the true image data D* containing a defect, for example, as shown in Fig. 34, cannot be clearly defined. Thus, analysis of the profile may fail to achieve precise specification of the range of the image data D* containing a defect.

The method used in the present embodiment is to specify the true image data D*, corresponding to the radiation detection element 7, of the portion reached by radiation directly without passing through the subject, and to exclude the true image data D* corresponding to the radiation detection element 7 from the scope for calculation of the aforementioned mean value D*ave(n). The following method, for example, is used to specify the true image data D*, corresponding to the radiation detection element 7, of the portion reached by radiation directly without passing through the subject.

As described above, the true image data D*, corresponding to the radiation detection element 7, of the portion reached by radiation directly without passing through the subject assumes a value that is equal to or close to the upper limit value that can be assumed by the true image data D*. This fact is utilized to preset, as a threshold value, a value that is equal to or close to the upper limit value that can be assumed by the true image data D*, for example. This makes it possible to configure such a structure that the true image data D* equal to or greater than the threshold value is uniformly excluded from the scope for calculation of the aforementioned mean value D*ave(n).

When the true image data D* is capable of assuming a value in the range from 0 through 65535 (= $2^{16}$-1), the threshold value is set at 64000, for example. Then the true image data D* having a value of 64000 or more is uniformly excluded from the scope for calculation of the aforementioned mean value D*ave(n).

In another method, it is also possible to design a structure that utilizes the result of the process of identifying the region wherein a subject image is captured, wherein this process is performed by the console 58 as an image processing device to generate a radiographic image (hereinafter referred to as "subject region identification processing").

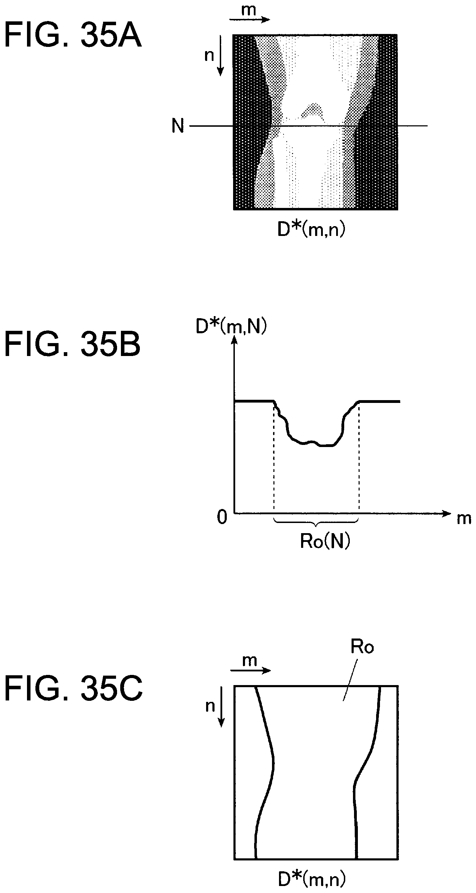

In the subject region identification processing, for example, the true image data D*(m, N) corresponding to the radiation detection elements (m, N) connected to the scanning line 5 of the line number N, for example, is extracted from the true image data D*(m, n), as shown in Fig. 35A. The extracted true image data D*(m, N) is plotted according to the order of the line number m of the signal line 6.

Then the true image data D*, corresponding to the radiation detection element 7, of the portion reached by radiation directly without passing through the subject assumes a value that is equal to or close to the upper limit value that can be assumed by the true image data D*, as shown in Fig. 35B. However, the true image data D* of the portion with the subject image captured therein assumes a smaller value.

Thus, analysis of this profile determines the region Ro(N) containing the subject image for the true image data D*(m, N) corresponding to the radiation detection elements (m, N) connected to the line number N of the scanning line 5, as shown in Fig. 35B. If this processing is applied for each scanning line 5, it is possible to determine and identify the region Ro containing the subject image in all the true image data D*, as shown in Fig. 35C.

Subject region identification processing enables identification of the region Ro containing the subject image in all the true image data D*, as described above.

The result of the subject region identification processing can be used to ensure that the true image data D*(m, n) pertaining to the region other than the region Ro containing the subject image is exclude from the scope for calculation of the aforementioned mean value D*ave(n).

After calculating the mean value D*ave(n) for each scanning line 5 in the above-mentioned procedure true image data D*(m, n) (Fig. 33), the console 58 as an image processing device analyzes the profile of the mean value D*ave(n), and specifies the range of the true image data D* containing a defect (i.e., the range of linear defect).

In this profile, the mean value D*ave(n) of the true image data D* containing a defect does not conform to the trend in the overall transition of the mean value D*ave(n) of the true image data D* free from defects. The present embodiment employs the following procedure to specify the range of the true image data D* containing a defect, for example.

In the radiographic image capturing device 1, it is possible to identify the line number n of the scanning line 5 to which on-voltage from the gate driver 15b has been applied, in the process of reading the image data d (for detection method 2) wherein start of irradiation has been detected, or in the process of resetting the radiation detection elements 7 (for detection method 1) immediately before the process of reading the leak data d leak wherein start of irradiation has been detected.

In the following description, "Na" will be used to represent the line number of this scanning line 5. In the example of Fig. 27, the scanning line 5 having the line number Na corresponds to the line Ln+2 of the scanning line 5 (i.e., the line number Na is n+2 in this case) with the on-voltage applied thereto, in the process of reading the image data d wherein start of irradiation has been detected. Further, the radiographic image capturing device 1 is designed so that the line number Na of this scanning line 5 is also transmitted when the image data D is sent to the console 58.

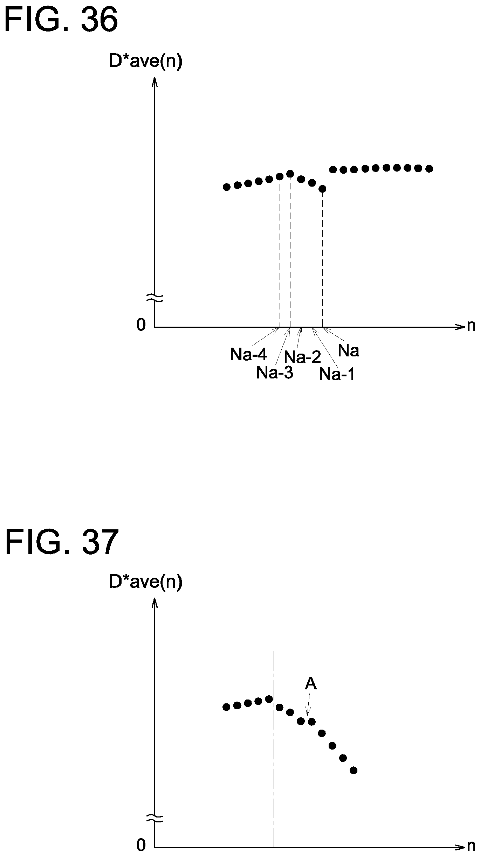

As shown in Fig. 36, the console 58 as an image processing device sequentially checks the mean value D*ave(n) corresponding to the line numbers Na-1, Na-2,... to which on-voltage has been applied, starting from the scanning line 5 having the line number Na with the on-voltage applied in the process of detecting the start of irradiation, in the profile of the mean value D*ave(n) of the true image data D*.

In the first place, the absolute value of the difference ΔD*ave between D*ave(Na) and D*ave(Na-1) is calculated, and a decision is made to see whether or not the absolute value of the difference ΔD*ave is below the threshold value preset to a value close to zero (0). In the example of Fig. 36, the absolute value of the difference ΔD*ave between D*ave(Na) and D*ave(Na-1) is equal to or greater than the threshold value. Accordingly, this is followed by the step of calculating the absolute value of the difference ΔD*ave between D*ave(Na-1) and D*ave(Na-2). A decision is made to see whether or not the absolute value of the difference ΔD*ave is below the threshold value.

If this processing is repeated, the absolute value of the difference ΔD*ave between D*ave(Na-1) and D*ave(Na-2) will be equal to or greater than the threshold value, and the absolute value of the difference ΔD*ave between D*ave(Na-2) and D*ave(Na-3) will also be equal to or greater than the threshold value in the example of Fig. 36. For the first time, the absolute value of the difference ΔD*ave between D*ave(Na-3) and D*ave(Na-4) is reduced below the threshold value.

In this case, it can be determined that radiation is applied from the radiation generator 52 (Fig. 11 and Fig. 12) to the radiographic image capturing device 1 at the time interval between the process of resetting the radiation detection elements 7 (for detection method 1) or the process of reading the image data d (for detection method 2) wherein on-voltage is applied to the scanning line 5 of the line number Na-3, and the process of resetting the radiation detection elements 7 or the process of reading the image data d on-voltage is applied to the scanning line 5 of the line number Na-2.

In this case, the console 58 identifies the scanning line 5 of line number Na-2 as a first scanning line 5 wherein a defect has started to occur to the image data D.

In this case, the range of the true image data D* (i.e., linear defect range) containing a defect is identified as the true image data D* corresponding to the radiation detection elements 7 connected to three scanning lines 5 having line numbers Na-2, Na-1 and Na To be more specific, of the true image data D*(m, n), the true image data D*(m, Na-2), D*(m, Na-1), D*(m, Na) are identified as pertaining to the range of the true image data D*.

As indicated by the arrow A of Fig. 37, in the range of the true image data D* containing a defect (the range inside two one-dot chain lines in the drawing), the absolute value of the difference ΔD*ave of the mean value D*ave(n) can be below the threshold value.

Thus, as described above, the structure is so designed as to calculate the aforementioned difference ΔD*ave by following the line number n of the scanning line 5 in descending order, and to continue calculation of the difference ΔD*ave, and comparison between the absolute value of the difference ΔD*ave and the threshold value, even if the absolute value of the difference ΔD*ave between mean values D*ave(n) has been reduced below the threshold value.

It is also possible to adopt such a structure that, when it has been verified that the differences ΔD*ave with the absolute value reduced below the threshold value appear on a continuous basis, a decision is made to determine that the range of the true image data D* containing a defect has been exceeded, and a step is taken to terminate the process of searching the range of the true image data D* containing a defect.

In addition to the aforementioned methods, it is also possible to specify the range of the true image data D* containing a defect by stricter image processing, for example.

After specifying the range of the true image data D* containing a defect (three scanning lines 5 corresponding to line numbers Na-2 through Na in the above-mentioned example) using the above-mentioned procedure, the console 58 as an image processing device recovers the true image data D* in the specified range. The true image data D* containing a defect can be recovered in the following procedure, for example.

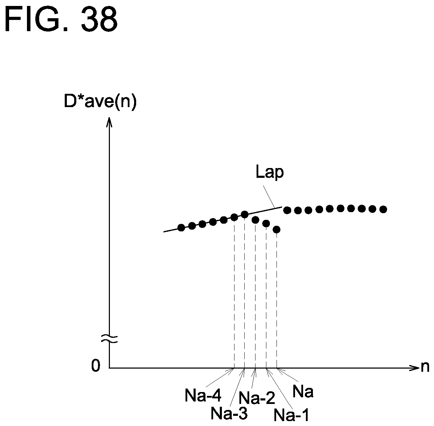

For example, in terms of the example of Fig. 36, the mean value D*ave(Na-3) or mean value D*ave(Na-4) on the left (in the drawing) of the mean value D*ave(Na-2) through D*ave(Na) specified as pertaining to the range of the true image data D* containing a defect, or the mean value D*ave(n) in the range including the mean value D*ave(n) on the left of the drawing is subjected to linear approximation by a straight line Lap as shown in Fig. 38. Namely, linear approximation is applied as follows:

$$D^*ap = a \times n + b \ldots (2)$$

The mean values D*ave(Na-2), D*ave(Na-1) and D*ave(Na) are considered as properly being a x (Na-2)+b, a x (Na-1)+b, a x Na+b which can be obtained by substituting the Na-2, Na-1, Na into the above-mentioned formula (2), if no defect has occurred.

The true image data D*(m, Na-2) corresponding to the radiation detection elements (m, Na-2) connected to the scanning line 5 of line number Na-2 is multiplied by {a x (Na-2)+d}/D*ave(Na-2). Namely, the following calculation is performed:

$$D^*(m, Na-2) \times \{a \times (Na-2)+b\}/D^*ave(Na-2) \ldots (3)$$

Thus, the true image data corresponding to the radiation detection elements (m, Na-2) connected to the scanning line 5 of the line number Na-2 is recovered.

In the similar manner, the following calculation is made of the true image data D*(m, Na-1), D*(m, Na) corresponding to the radiation detection elements (m, Na-1), (m, Na) connected to the scanning line 5 of the line number Na-1, Na:

$$D^*(m, Na-1) \times \{a \times (Na-1)+b\}/D^*ave(Na-1) \ldots (4)$$

$$D^*(m, Na) \times \{a \times (Na)+b\}/D^*ave(Na) \ldots (5)$$

Thus, the true image data corresponding to the radiation detection elements (m, Na-1), (m, Na) connected to the scanning lines 5 of the line numbers Na-1, Na is restored.

A linear approximation method can be used to ensure precise recovery of the true image data D* in the ranges specified as the range of the true image data D* containing a defect, as described above.

In another recovery method, for example, the console 58 as an image processing device previously contains the information on the relationship between the number of the scanning lines 5 from the first scanning line 5 (i.e., scanning line 5 of line number Na-2 in the above-mentioned example) wherein a defect starts to appear, to the scanning line 5 to be recovered, out of the scanning lines 5 (i.e., scanning lines 5 of line numbers Na-2 through Na in the above-mentioned example) of the radiographic image capturing device 1 corresponding to the range of the true image data D* containing a defect, and the coefficient to be multiplied by the true image data D* corresponding to the radiation detection elements 7 connected to the scanning line 5 to be recovered.

To be more specific, in the first scanning line 5 counted from the first scanning line 5 wherein a defect starts to appear (i.e., the scanning line 5 of the line number Na-2 in the above-mentioned example), the coefficient to be multiplied by the true image data D* corresponding to the radiation detection elements 7 connected to this scanning line 5 is assumed to be 1.1, for example. In the second scanning line 5 counted from the first scanning line 5 wherein a defect starts to appear (i.e., the scanning line 5 of the line number Na-1 in the above-mentioned example), the coefficient to be multiplied by the true image data D* corresponding to the radiation detection elements 7 connected to this scanning line 5 is assumed to be 1.2.

Further, in the third scanning line 5 counted from the first scanning line 5 wherein a defect starts to appear (i.e., the scanning line 5 of the line number Na in the above-mentioned example), the coefficient to be multiplied by the true image data D* corresponding to the radiation detection elements 7 connected to this scanning line 5 is assumed to be 1.3. The information of such a relationship is stored in the console 58 in advance.

The above-mentioned relationship is found out in advance by conducting a test. In the information on this relationship, the ordinal number of the scanning line 5 counted from the first scanning line 5 wherein a defect starts to appear should be stored is determined by the sensitivity at the time of detection of the start of irradiation in the radiographic image capturing device 1.

The console 58 analyzes the profile of the true image data D* and mean value D*ave(n) using the above-mentioned procedure and specifies the first scanning line 5 wherein a defect starts to appear, and the range of the true image data D* containing a defect. Referring to the aforementioned information, the console 58 allows the true image data D* in the specified range to be multiplied by the aforementioned coefficient assigned to the scanning line 5 connected to the radiation detection element 7 corresponding to this true image data D*.

In this procedure, the true image data D* in the range specified as the range of the true image data D* containing a defect can be precisely recovered using the information on the coefficient of the aforementioned scanning line 5.

In addition to the aforementioned methods, it is possible use a stricter image processing method to recover the true image data D* containing a defect, for example.

As described above, in the radiographic image capturing system 50 of the present invention, operation the process of reading the leak data d leak and the process of reading the image data d are performed in the radiographic image capturing device 1 prior to radiographic image capturing operation. The start of irradiation is detected based on the value of the leak data d leak and image data d having been read out.

Thus, as described above, the radiographic image capturing device 1 itself is capable of precisely detecting the start of irradiation, based on the leak data d leak and image data d having been read out, for example, without having to provide the radiographic image capturing device 1 with a current detecting means for detecting the current flowing through the bias line 9, as in the inventions as disclosed in the Specification of the U.S. Patent No. 7211803 and Unexamined Japanese Patent Application Publication No. 2009-219538.

A current detecting means is not provided, as described above. This provides a surefire means for preventing occurrence of such a problem that the noise having occurred to the current detecting means is transmitted to the radiation detection elements 7 through a bias line 9 and is superimposed on the image data D as a noise.

If the start of irradiation is detected by the radiographic image capturing device 1 in the above-mentioned procedure, a linear defect inevitably occurs in the image data D. Many linear defects may occur on a continuous basis, depending on the calculation method used in the detection of the start of irradiation.

In the radiographic image capturing system 50 of the present invention, under this condition, the range of the image data D containing the defect is specified in conformity to the calculation method used for the detection of the start of irradiation. The image data D in the specified range is recovered by the recovery method conforming to this calculation method.

For example, if the number of linear defects is one or two (Fig. 26) as in calculation methods A through C, interpolation is made using the adjacent image data D. When many linear defects have occurred on a continuous basis as in the calculation method D, the profile of the image data D (or true image data D* or the mean value thereof) is analyzed (Fig. 38 and others) to provide proper repair of the image data D containing the defect in conformity to the characteristics of each calculation method.

Thus, accurate generation of the radiographic image is ensured based on the properly recovered image data D. This provides a positive means for eliminating such problems that, for example, the viewability of the radiographic image is deteriorated by entry of a linear defect in the radiographic image, or a linear defect is mistaken for a lesion or a lesion is overlooked by the doctor in the medical examination due to the presence of a linear defect.

The calculation method A (average value method), calculation method B (difference method), calculation method C (Max-Min method), and calculation method D (accumulation method) were mentioned in the above-mentioned embodiment, as calculation methods used to detect the start of irradiation in the radiographic image capturing device 1.

Further, the method of recovering the image data D containing the defect is not restricted to the examples given above with reference to the above-mentioned embodiment.

For example, when the process of reading the image data d is to be performed using the detection method 2 prior to radiographic image capturing operation, the image data d having been read out is saved. When the image data D as a final image is sent to the image processing device from the radiographic image capturing device 1, the image data d is also sent. Then the image data D can be recovered by adding the image data d to the image data D containing the defect in the image processing device.

The detection portion P (Fig. 4 and Fig. 7) of the radiographic image capturing device 1 may be divided into a plurality of regions in some cases. The leak data d leak and image data d having been read out in each region is calculated by a plurality of mutually differing calculation methods. The start of irradiation is detected based on each calculated value in some cases.

In these cases, the structure is considered to be configured in such a way that, when the start of irradiation has been detected in any one of the regions, detection processing is suspended simultaneously in all regions, and the electric charge accumulation state is assumed. In this case, the start of irradiation may be detected simultaneously in a plurality of regions out of the detection portion P, and calculation methods used at the time of detection may be different for each region.

In such a case, recovery processing can be independently performed based on the calculation method used to detect the start of irradiation for each region. It is also possible to adopt such a structure as to select, out of the calculation methods used to detect the start of irradiation in each region, the calculation method characterized by the longest response time between the actual start of irradiation on radiographic image capturing device 1 from the radiation generator 52, to the detection of the start of irradiation by the radiographic image capturing device 1. The image data D possibly containing a defect of each region is then recovered using the corresponding recovery method.

It goes without saying that the present invention can be modified as required, without being restricted to the aforementioned embodiments.

According to the radiographic image capturing system and radiographic image capturing device of the present invention, the leak data d leak and the image data d for detecting the start or irradiation are read out by the radiographic image capturing device prior to radiographic image capturing operation, and the start of irradiation is detected based on the value of the read-out leak data d leak and image data d. Thus, the start of irradiation can be precisely detected by the radiographic image capturing device itself based on the read-out values of the leak data d leak and image data d, without the radiographic image capturing device being provided with a current detecting means for detecting the electric current flowing through the bias line 9, as described above, for example.

Further, a current detecting means is not provided. This provides a surefire means for preventing occurrence of such a problem that the noise having occurred to the current detecting means is transmitted to the radiation detection elements 7 through a bias line 9 and is superimposed on the image data D as a noise.

If the start of irradiation is detected by the radiographic image capturing device 1 in the above-mentioned procedure, a linear defect inevitably occurs in the image data D. Many linear defects may occur on a continuous basis, depending on the calculation method used in the detection of the start of irradiation. In the radiographic image capturing system, even under this condition, the image data D containing the defect is recovered by the recovery method corresponding to the calculation method used to detect the start of irradiation. This ensures the image data D containing the defect to be recovered correctly in conformity to the particular characteristics of each calculation method.

Accurate generation of the radiographic image is provided based on the properly recovered image data D. This provides a positive means for eliminating such problems that, for example, the viewability of the radiographic image is deteriorated by entry of a linear defect in the radiographic image, or a linear defect is mistaken for a lesion or a lesion is overlooked by the doctor in the medical examination due to the presence of a linear defect.

**Claims**

1. A radiation image capturing system (50), comprising:

    a radiation image capturing apparatus (1) comprising:

        a detecting section (P) provided with:

            a plurality of scanning lines (5) and a plurality of signal lines (6) arranged so as to cross each other; and

a plurality of radiation detection elements (7) arranged two-dimensionally in regions (r) each partitioned by the plurality of scanning lines and the plurality of signal lines;

a scanning drive unit (15) which sequentially applies on-voltage by switching the scanning lines to each of the scanning lines which applies the on-voltage;

switching means (8) each connected to respective ones of the scanning lines so as to discharge electric charge accumulated in respective ones of the radiation detection elements to respective ones of the signal lines when the on-voltage is applied;

a reading circuit (16) for converting the electric charge discharged from the radiation detection elements into image data and reading out the image data; and

a control device (22) for controlling at least the scanning drive unit (15) and the reading circuit (16) to read out the image data from the radiation detection elements (7), wherein the control device is configured to repeatedly read out leak data by converting the electric charge having leaked through the switching means from the radiation detection elements into leak data by allowing the reading circuit to perform a cyclic reading operation while each of the switching means is turned off by allowing the scanning drive unit to apply off-voltage to all the scanning lines, and further configured to detect that irradiation has started when a value of any one of the leak data calculated using one of a plurality of calculation methods exceeds a corresponding set threshold value among a plurality of threshold values each of which is set for each of the respective plurality of calculation methods, prior to radiation image capturing operation, and wherein the plurality of calculation methods comprise calculating the average value for a signal line, calculating the difference between an average value and a moving average value for a signal line, calculating the difference between the maximum value and the minimum value of the difference between an average value and a moving average value for a signal line and calculating the accumulated value of the difference between an average value and a moving average value for a signal line;

a communication unit (54) for exchanging signals with an external device; and

an image processing apparatus (58) for generating a radiation image based on the image data sent from the radiation image capturing apparatus, wherein the control device is further configured to send information of the calculation method used for the calculation of the value of the leak data by which the start of irradiation was detected and wherein the image processing apparatus identifies a range of the image data containing a defect based on the information of the calculation method sent from the radiation image capturing apparatus, and repairs the image data in the identified range with a recovery method corresponding to the calculation method.

2. The radiation image capturing system (50) of claim 1, wherein the control device (22) is configured to repeat alternately the reading out leak data and resetting for each of the radiation detection elements (7), prior to radiation image capturing operation.

3. A radiation image capturing system (50), comprising:

a radiation image capturing apparatus (1) including:

a detecting section provided with:

a plurality of scanning lines (5) and a plurality of signal lines (6) arranged so as to cross each other; and
a plurality of radiation detection elements (7) arranged two-dimensionally in regions (r) each partitioned by the plurality of scanning lines and the plurality of signal lines;

a scanning drive unit (15) which sequentially applies on-voltage by switching the scanning lines to each of the scanning lines which applies the on-voltage;

switching means (8) each connected to respective ones of the scanning lines so as to discharge electric charge accumulated in respective ones of the radiation detection elements to respective ones of the signal lines when the on-voltage is applied;

a reading circuit (16) for converting the electric charge discharged from the radiation detection elements into image data and reading out the image data; and

a control device (22) for controlling at least the scanning drive unit (8) and the reading circuit (16) to perform reading out the image data from the radiation detection elements,

wherein the control device is configured to repeat reading out the image data for detection of the start of irradiation by allowing the scanning drive unit to apply on-voltage sequentially to each of the scanning lines, and is further configured to detect that irradiation has started when a value of any one of the image data for detection of the start of irradiation calculated using a plurality of calculation methods exceeds a corresponding set threshold value among a plurality of threshold values each of which is set for each of the respective plurality of calculation methods, prior to radiation image capturing operation, and wherein the plurality of calculation methods comprise calculating the average value for a signal line, calculating the difference between an average value and a moving average value for a signal line, calculating the difference between the maximum value and the minimum value of the difference between an average value and a moving average value for a signal line and calculating the accumulated value of the difference between an average value and a moving average value for a signal line; a communication unit for exchanging signals with an external device; and

an image processing apparatus (58) for generating a radiation image based on the image data sent from the radiation image capturing apparatus, wherein the controller is further configured to send information of the calculation method used for the calculation of the value by which the start of irradiation was detected and wherein the image processing apparatus identifies a range of the image data containing a defect based on the information of the calculation method sent from the radiation image capturing apparatus, and repairs the image data in the identified range with a recovery method corresponding to the calculation method.

4. The radiation image capturing system (50) of any of claims 1, 2 or 3, further comprising a radiation generator (52) for irradiating the radiation image capturing apparatus,

wherein, when the start of irradiation is detected based on the value calculated by the calculation method for which the time of an actual start of irradiation of the radiographic image capturing device from the radiation generator is the same as the time of a detection of the start of irradiation by the radiographic image capturing device, the image processing apparatus disables each of the image data containing a linear defect and recovers the disabled image data by interpolation based on a value of the image data read out for each of radiation detection elements connected to a scanning line adjacent to a scanning line to which each of the radiation detection elements from which the image data containing a linear defect has been read out is connected.

5. The radiation image capturing system of any one of claims 1, 2 or 3, further comprising a radiation generator irradiating to the radiation image capturing apparatus,

wherein, when the start of irradiation is detected based on the value calculated by the calculation method for which the time of an actual start of irradiation from the radiation generator on the radiographic image capturing device is before a detection of the start of irradiation by the radiographic image capturing device, the image processing apparatus identifies a range of the image data containing a linear defect by analyzing a profile of the image data along an extension of a signal line from which the image data was read out, and recovers the image data of the identified range.

6. The radiation image capturing system of claim 5, wherein the image processing apparatus stores information of a relationship between a number of scanning lines from a first scanning line from which the defect starts to appear to a last scanning line including the defect to be recovered among each scanning line of the radiation image capturing apparatus corresponding to the range of the image data containing the defect, and a coefficient to be multiplied by each of the image data which has been read out from each of the radiation detection elements connected to each of the respective scanning lines of the defect to be recovered;

identifies the range of the image data containing the defect by analyzing the profile of the image data along the extension of the signal line of the radiation image capturing apparatus and identifies the first scanning line from which the defect starts to appear, and;

recovers each of the image data for each scanning line from the first scanning line to the last scanning line multiplying each of the image data in the identified range by the coefficient assigned to the scanning line connected to the radiation detection element from which the image data has been read out, by referring to the information of the relationship between the number of scanning lines.

7. The radiation image capturing system of claim 1, 2 or 3, further comprising a radiation generator irradiating to the radiation image capturing apparatus,

wherein, when the start of irradiation is detected based on the value calculated by the calculation method for which the time of an actual start of irradiation from the radiation generator on the radiographic image capturing device is before a detection of the start of irradiation by the radiographic image capturing device, the image processing apparatus identifies a range of the image data containing a linear defect by calculating a mean value for the image data along the extension of the scanning line for each of the scanning lines of the radiation image capturing apparatus, and analyzing a profile of the mean value along the extension of the signal line of the radiation image capturing apparatus, and recovers the image data of the identified range.

**Patentansprüche**

1.  Ein Strahlungsbilderfassungssystem (50), das umfasst:

    eine Strahlungsbildaufnahmevorrichtung (1), die umfasst:

    einen Erfassungsabschnitt (P), der ausgestattet ist mit:

    einer Mehrzahl von Abtastleitungen (5) und einer Mehrzahl von Signalleitungen (6), die so angeordnet sind, dass sie sich kreuzen, und
    einer Mehrzahl von Strahlungserfassungselementen (7), die zweidimensional in Bereichen (r) angeordnet sind, die jeweils durch die Mehrzahl von Abtastleitungen und die Mehrzahl von Signalleitungen unterteilt sind,

    eine Abtastantriebseinheit (15), welche sequenziell eine on-Spannung anwendet, in dem die Abtastleitungen zu jeder der Abtastleitungen geschaltet werden, die die on-Spannung anwendet;
    Schaltmittel (8), die jeweils mit jeweiligen Abtastleitungen so verbunden sind, dass sie elektrische Ladung, die sich in den jeweiligen Strahlungserfassungselementen akkumuliert hat, zu den jeweiligen Signalleitungen entlädt, wenn die on-Spannung angewandt wird,
    eine Ausleseschaltung (16) zum Konvertieren der elektrischen Ladung, die von den Strahlungserfassungselementen entladen wird, in Bilddaten und zum Auslesen der Bilddaten, und
    eine Steuervorrichtung (22) zum Steuern der Abtastantriebseinheit (15) und/oder der Ausleseschaltung (16), um die Bilddaten von den Strahlungserfassungselementen (7) auszulesen, wobei die Steuervorrichtung ausgestaltet ist, um wiederholt Leckdaten auszulesen, durch Konvertieren elektrischer Ladung, die durch die Schaltmittel von den Strahlungserfassungselementen ausgetreten ist, durch Erlauben, dass die Ausleseschaltung einen zyklischen Auslesevorgang durchführt, während jedes der Schaltelemente ausgeschaltet ist, durch Erlauben, dass die Ausleseantriebseinheit eine off-Spannung auf alle Ausleseleitungen anwendet, und die ferner ausgestaltet ist, um zu erfassen, dass eine Bestrahlung gestartet ist, wenn ein Wert einer der Leckdaten, der unter Verwendung eines von einer Mehrzahl von Berechnungsverfahren berechnet wird, einen korrespondierenden eingestellten Grenzwert unter einer Mehrzahl von Grenzwerten übersteigt, wobei jeder Grenzwert für jedes der jeweiligen Mehrzahl von Berechnungsverfahren vor einem Strahlungsbilderfassungsvorgang eingestellt ist, und wobei die Mehrzahl von Berechnungsverfahren ein Berechnen des Durchschnittswerts für eine Signalleitung, ein Berechnen der Differenz zwischen einem Durchschnittswert und einem gleitenden Durchschnittswert für eine Signalleitung, ein Berechnen der Differenz zwischen dem Maximalwert und dem Minimalwert der Differenz zwischen einem Durchschnittswert und einem gleitenden Durchschnittswert für eine Signalleitung und ein Berechnen des akkumulierten Werts der Differenz zwischen einem Durchschnittswert und einem gleitenden Durchschnittswert für eine Signalleitung umfasst,

    eine Kommunikationseinheit (54) zum Austausch von Signalen mit einer externen Vorrichtung, und
    eine Bildverarbeitungsvorrichtung (58) zum Erzeugen eines Strahlungsbilds basierend auf den Bilddaten, die von der Strahlungsbilderfassungsvorrichtung gesandt werden, wobei die Steuervorrichtung ferner ausgestaltet ist, um eine Information des Berechnungsverfahrens zu senden, das zum Berechnen des Werts der Leckdaten verwendet wird, bei welchem der Start einer Bestrahlung erfasst worden ist, und wobei die Bildverarbeitungsvorrichtung einen Bereich der Bilddaten, der eine Fehlstelle enthält, basierend auf der Information des Berechnungsverfahrens, die von der Strahlungsbilderfassungsvorrichtung gesendet wird, identifiziert und die Bilddaten in dem identifizierten Bereich mit einem Wiederherstellungsverfahren, das zu dem Berechnungsverfahren korrespondiert, repariert bzw. wiederherstellt.

2.  Das Strahlungsbilderfassungssystem (50) gemäß Anspruch 1, wobei die Steuervorrichtung (22) ausgestaltet ist, um alternierend das Auslesen von Leckdaten zu wiederholen und um jedes der Strahlungserfassungselemente (7) vor einem Strahlungsbilderfassungsvorgang rückzusetzen.

3.  Ein Strahlungsbilderfassungssystem (50), das umfasst:

eine Strahlungsbildaufnahmevorrichtung (1), die umfasst:

einen Erfassungsabschnitt, der ausgestattet ist mit:

einer Mehrzahl von Abtastleitungen (5) und einer Mehrzahl von Signalleitungen (6), die so angeordnet sind, dass sie einander kreuzen, und
einer Mehrzahl von Strahlungserfassungselementen (7), die zweidimensional in Bereichen (r) angeordnet sind, die durch die Mehrzahl von Abtastleitungen und die Mehrzahl von Signalleitungen jeweils unterteilt sind,

eine Abtastantriebseinheit (15), welche sequenziell eine on-Spannung anwendet, in dem die Abtastleitungen zu jeder der Abtastleitungen geschaltet werden, die die on-Spannung anwendet;
Schaltmittel (8), die jeweils mit jeweiligen Abtastleitungen so verbunden sind, dass sie elektrische Ladung, die sich in den jeweiligen Strahlungserfassungselementen akkumuliert, zu den jeweiligen Signalleitungen entlädt, wenn die on-Spannung angewandt wird,
eine Ausleseschaltung (16) zum Konvertieren der elektrischen Ladung, die von den Strahlungserfassungselementen entladen wird, in Bilddaten und zum Auslesen der Bilddaten, und
eine Steuervorrichtung (22) zum Steuern der Ableseantriebseinheit (8) und/oder der Ausleseschaltung (16), um ein Auslesen der Bilddaten von den Strahlungserfassungselementen durchzuführen,

wobei die Steuervorrichtung ausgestaltet ist, um die Bilddaten wiederholt auszulesen, zum Erfassen des Starts der Bestrahlung durch Erlauben, dass die Abtastantriebseinheit ein on-Spannung sequenziell auf die Abtastleitungen anwendet, und ferner ausgestaltet ist, um zu erfassen, dass die Bestrahlung gestartet ist, wenn ein Wert einer der Bilddaten zum Erfassen des Starts der Bestrahlung, der unter Verwendung einer Mehrzahl von Berechnungsverfahren berechnet wird, einen korrespondierenden eingestellten Grenzwert unter einer Mehrzahl von Grenzwerten übersteigt, wobei jeder der Grenzwerte für das jeweilige der Mehrzahl von Berechnungsverfahren vor dem Strahlungsbilderfassungsvorgang eingestellt ist, und wobei die Mehrzahl von Berechnungsverfahren eine Berechnung des Mittelwerts für eine Signalleitung, ein Berechnen der Differenz zwischen einem Mittelwert und einem gleitenden Mittelwert für eine Signalleitung, ein Berechnen der Differenz zwischen dem Maximalwert und dem Minimalwert der Differenz zwischen einem Mittelwert und einem gleitenden Mittelwert für eine Signalleitung und ein Berechnen des akkumulierten Werts der Differenz zwischen einem Mittelwert und einem gleitenden Mittelwert für eine Signalleitung umfasst,
eine Kommunikationseinheit zum Signalaustausch mit einer externen Vorrichtung, und
eine Bildverarbeitungsvorrichtung (58) zum Erzeugen eines Strahlungsbilds basierend auf den Bilddaten, die von der Strahlungsbilderfassungsvorrichtungen gesendet werden, wobei die Steuerung ferner ausgestaltet ist, um eine Information des Berechnungsverfahrens zu senden, das zur Berechnung des Werts, bei welchem der Start der Bestrahlung erfasst wurde, verwendet wurde, und wobei die Bildverarbeitungsvorrichtung einen Bereich der Bilddaten identifiziert, der einen Fehler enthält, basierend auf der Information des Berechnungsverfahrens, die von der Strahlungsbilderfassungseinheit gesendet wird, und die Bilddaten in dem identifizierten Bereich mit einem Wiederherstellungsverfahren, das zu dem Berechnungsverfahren korrespondiert, repariert bzw. wiederherstellt.

4. Das Strahlungserfasungssystem (50) gemäß einem der Ansprüche 1, 2 oder 3, ferner umfassend einen Strahlungserzeuger (52) zum Bestrahlen der Strahlungsbilderfassungsvorrichtung,
wobei die Bildverarbeitungsvorrichtung jede der Bilddaten blockiert, die einen linearen Fehler enthalten, und die blockierten Bilddaten durch Interpolation basierend auf einem Wert der Bilddaten wiederherstellt, der für jedes der Strahlungserfassungselemente ausgelesen wird, das mit einer Abtastleitung verbunden ist, die benachbart zu einer Abtastleitung ist, mit welcher jedes der Strahlungserfassungselemente, von welchem die Bilddaten ausgelesen wurden, die einen linearen Fehler enthalten, verbunden ist, wenn der Start der Bestrahlung basierend auf dem Wert erfasst wird, der durch das Berechnungsverfahren berechnet wird, für welches die Zeit eines aktuellen Starts der Bestrahlung der Strahlungsbilderfassungsvorrichtung von dem Strahlungsgenerator dieselbe ist, wie die Zeit eines Erfassens des Starts einer Bestrahlung durch die Strahlungsbilderfassungsvorrichtung.

5. Das Strahlungsbilderfassungssystem gemäß einem der Ansprüche 1, 2 oder 3 ferner umfassend einen Strahlungsgenerator, der die Strahlungsbilderfassungsvorrichtungen bestrahlt,
wobei die Bildverarbeitungsvorrichtung durch Analysieren eines Profils der Bilddaten entlang einer Ausdehnung einer Signalleitung, von welcher die Bilddaten ausgelesen wurden, einen Bereich der Bilddaten identifiziert, der einen linearen Fehler enthält, und die Bilddaten des identifizierten Bereichs wiederherstellt, wenn der Start der Bestrahlung basierend auf dem Wert detektiert wird, der durch das Berechnungsverfahren berechnet wird, für welches die Zeit eines tatsächlichen Starts der Bestrahlung von dem Strahlungsgenerator an der Strahlungsbilderfassungsvorrichtung vor einem Erfassen des Starts der Bestrahlung durch die Strahlungsbilderfassungsvorrichtung ist.

6. Das Strahlungsbilderfassungssystem gemäß Anspruch 5, wobei die Bildverarbeitungsvorrichtung eine Information einer Beziehung zwischen einer Anzahl von Abtastleitungen - von einer ersten Abtastleitung, von welcher der Fehler anfängt aufzutreten, bis zu einer letzten Abtastleitung, die den wiederherzustellenden Fehler enthält - unter jeder der Abtastleitung der Strahlungsbildaufnahmevorrichtung, die zu dem Bereich der Bilddaten korrespondiert, die den Fehler enthält, und ein Koeffizient, der mit jeder der Bilddaten zu Multiplizieren ist, welche von jedem der Strahlungserfassungselemente ausgelesen wurden, die mit der jeweiligen Abtastleitung des Fehlers, der wiederherzustellen ist, verbunden ist, speichert,
den Bereich der Bilddaten, der den Fehler enthält, durch Analysieren des Profils der Bilddaten entlang der Erstreckung der Signalleitung der Strahlungsbilderfassungsvorrichtung und die erste Abtastleitung, von welcher der Fehler anfängt aufzutreten, identifiziert, und
die jeweiligen Bilddaten für jede Abtastleitung - von der ersten Abtastleitung bis zu der letzten Abtastleitung - durch Multiplizieren jeder der Bilddaten in dem identifizierten Bereich mit dem Koeffizienten, der der Abtastleitung zugeordnet ist, die mit dem Strahlungserfassungselement verbunden ist, von welchen die Bilddaten ausgelesen wurden, durch Bezug auf die Information der Beziehung zwischen der Anzahl von Abtastleitungen wiederherstellt.

7. Das Strahlungsbilderfassungssystem gemäß Anspruch 1, 2 oder 3, ferner umfassend einen Strahlungsgenerator, der die Strahlungsbilderfassungsvorrichtungen bestrahlt,
wobei die Bildverarbeitungsvorrichtung einen Bereich identifiziert, der Bilddaten mit einem linearen Fehler enthält, durch Berechnen eines Hauptwerts für die Bilddaten entlang der Erstreckung der Abtastleitung für jede der Abtastleitungen von der Strahlungsbilderfassungsvorrichtung, und die ein Profil des Hauptwerts entlang der Erstreckung der Signalleitung des Strahlungsbilderfassungsvorrichtung analysiert und die Bilddaten des identifizierten Bereichs wiederherstellt, wenn der Start der Bestrahlung basierend auf dem Wert, der durch das Berechnungsverfahren berechnet wurde, erfasst wird, wobei für das Berechnungsverfahren die Zeit eines tatsächlichen Starts der Bestrahlung von dem Bestrahlungsgenerator an der Strahlungsbilderfassungsvorrichtung vor einem Start der Bestrahlung durch die Strahlungsbilderfassungsvorrichtung ist.

**Revendications**

1. Système de capture d'images de rayonnement (50), comprenant :

un appareil de capture d'images de rayonnement (1) comprenant :

une section de détection (P) dotée des éléments suivants :

une pluralité de lignes de balayage (5) et une pluralité de lignes d'acheminement de signaux (6) agencées de manière à se croiser mutuellement ; et
une pluralité d'éléments de détection de rayonnement (7) agencée de manière bidimensionnelle dans des zones (r) qui sont chacune partitionnées par la pluralité de lignes de balayage et la pluralité de lignes d'acheminement de signaux ;

une unité de commande de balayage (15) qui applique séquentiellement une tension à l'état actif en commutant les lignes de balayage sur chacune des lignes de balayage appliquant la tension à l'état actif ;
des moyens de commutation (8) qui sont chacun connectés à des lignes respectives des lignes de balayage, de manière à décharger une charge électrique accumulée dans des éléments respectifs des éléments de détection de rayonnement vers des lignes respectives des lignes d'acheminement de signaux, lorsque la tension à l'état actif est appliquée ;
un circuit de lecture (16) destiné à convertir la charge électrique déchargée à partir des éléments de détection de rayonnement en des données d'image, et à lire les données d'images ; et
un dispositif de commande (22) destiné à commander au moins l'unité de commande de balayage (15) et le circuit de lecture (16) en vue de lire les données d'image à partir des éléments de détection de rayonnement (7), dans lequel le dispositif de commande est configuré de manière à lire, de façon répétée, des données de dispersion, en convertissant la charge électrique dispersée à travers les moyens de commutation à partir des éléments de détection de rayonnement, en des données de dispersion, en permettant au circuit de lecture de mettre en oeuvre une opération de lecture cyclique tandis que les moyens de commutation sont chacun hors tension, en autorisant l'unité de commande de balayage à appliquer une tension à l'état inactif à toutes les lignes de balayage, et est en outre configuré de manière à détecter qu'un rayonnement a commencé lorsqu'une valeur de l'une quelconque des données de dispersion, calculée en faisant appel à une procédé d'une pluralité de procédés de calcul, est supérieure à une valeur de seuil définie correspondante parmi une pluralité de valeurs de seuil dont chacune est définie pour chaque procédé de la pluralité respective de procédés de calcul, avant une opération de capture d'images de rayonnement, et dans lequel la pluralité de procédés de calcul comporte le calcul de la valeur moyenne pour une ligne d'acheminement de signaux, le calcul de la différence entre une valeur moyenne et une valeur moyenne mobile pour une ligne d'acheminement de signaux, le calcul de la différence entre la valeur maximale et la valeur minimale de la différence entre une valeur moyenne et une valeur moyenne mobile pour une ligne d'acheminement de signaux, et le calcul de la valeur cumulée de la différence entre une valeur moyenne et une valeur moyenne mobile pour une ligne d'acheminement de signaux ;

une unité de communication (54) destinée à échanger des signaux avec un dispositif externe ; et

un appareil de traitement d'images (58) destiné à générer une image de rayonnement sur la base des données d'image envoyées à partir de l'appareil de capture d'images de rayonnement, dans lequel le dispositif de commande est en outre configuré de manière à envoyer des informations du procédé de calcul ayant servi au calcul de la valeur des données de dispersion moyennant quoi le début de rayonnement a été détecté, et dans lequel l'appareil de traitement d'images identifie une plage des données d'image contenant un défaut sur la base des informations du procédé de calcul, envoyées à partir de l'appareil de capture d'images de rayonnement, et répare les données d'image dans la plage identifiée en faisant appel à un procédé de récupération correspondant au procédé de calcul.

2. Système de capture d'images de rayonnement (50) selon la revendication 1, dans lequel le dispositif de commande (22) est configuré de manière à répéter, de manière alternée, la lecture de données de dispersion, et la réinitialisation, pour chacun des éléments de détection de rayonnement (7), avant une opération de capture d'images de rayonnement.

3. Système de capture d'images de rayonnement (50), comprenant :

un appareil de capture d'images de rayonnement (1) incluant :

une section de détection dotée des éléments suivants :

une pluralité de lignes de balayage (5) et une pluralité de lignes d'acheminement de signaux (6) agencées de manière à se croiser mutuellement ; et

une pluralité d'éléments de détection de rayonnement (7) agencée de manière bidimensionnelle dans des zones (r) qui sont chacune partitionnées par la pluralité de lignes de balayage et la pluralité de lignes d'acheminement de signaux ;

une unité de commande de balayage (15) qui applique séquentiellement une tension à l'état actif en commutant les lignes de balayage sur chacune des lignes de balayage appliquant la tension à l'état actif ;

des moyens de commutation (8) qui sont chacun connectés à des lignes respectives des lignes de balayage, de manière à décharger une charge électrique accumulée dans des éléments respectifs des éléments de détection de rayonnement vers des lignes respectives des lignes d'acheminement de signaux, lorsque la tension à l'état actif est appliquée ;

un circuit de lecture (16) destiné à convertir la charge électrique déchargée à partir des éléments de détection de rayonnement en des données d'image, et à lire les données d'images ; et

un dispositif de commande (22) destiné à commander au moins l'unité de commande de balayage (8) et le circuit de lecture (16) en vue de mettre en oeuvre une lecture des données d'image à partir des éléments de détection de rayonnement ;

dans lequel le dispositif de commande est configuré de manière à répéter la lecture des données d'image en vue de détecter le début du rayonnement, en permettant à l'unité de commande de balayage d'appliquer une tension à l'état actif, séquentiellement, à chacune des lignes de balayage, et est en outre configuré de manière à détecter que le rayonnement a commencé lorsqu'une valeur de l'une quelconque des données d'image pour la détection du début de rayonnement, calculée en faisant appel à une pluralité de procédés de calcul, est supérieure à une valeur de seuil définie correspondante parmi une pluralité de valeurs de seuil dont chacune est définie pour chaque procédé de la pluralité respective de procédés de calcul, avant une opération de capture d'images de rayonnement, et dans lequel la pluralité de procédés de calcul comporte le calcul de la valeur moyenne pour une ligne d'acheminement de signaux, le calcul de la différence entre une valeur moyenne et une valeur moyenne mobile pour une ligne d'acheminement de signaux, le calcul de la différence entre la valeur maximale et la valeur minimale de la différence entre une valeur moyenne et une valeur moyenne mobile pour une ligne d'acheminement de signaux, et le calcul de la valeur cumulée de la différence entre une valeur moyenne et une valeur moyenne mobile pour une ligne d'acheminement de signaux ;

une unité de communication destinée à échanger des signaux avec un dispositif externe ; et

un appareil de traitement d'images (58) destiné à générer une image de rayonnement sur la base des données d'image envoyées à partir de l'appareil de capture d'images de rayonnement, dans lequel le dispositif de commande, ou contrôleur, est en outre configuré de manière à envoyer des informations du procédé de calcul ayant servi au calcul de la valeur moyennant quoi le début de rayonnement a été détecté, et dans lequel l'appareil de traitement d'images identifie une plage des données d'image contenant un défaut sur la base des informations du procédé de calcul envoyées à partir de l'appareil de capture d'images de rayonnement, et répare les données d'image dans la plage identifiée en faisant appel à un procédé de récupération correspondant au procédé de calcul.

4. Système de capture d'images de rayonnement (50) selon l'une quelconque des revendications 1, 2 et 3, comprenant en outre un générateur de rayonnement (52) destiné à irradier l'appareil de capture d'images de rayonnement ;

dans lequel, lorsque le début de rayonnement est détecté sur la base de la valeur calculée par le procédé de calcul pour laquelle l'heure d'un début de rayonnement effectif du dispositif de capture d'images radiographiques à partir du générateur de rayonnement est identique à l'heure d'une détection du début de rayonnement par le dispositif de capture d'images radiographiques, l'appareil de traitement d'images désactive chacune des données d'image contenant un défaut linéaire et récupère les données d'image désactivées, par interpolation, sur la base d'une valeur des données d'image lues pour chacun des éléments de détection de rayonnement connectés à une ligne de balayage qui est adjacente à une ligne de balayage à laquelle sont connectés chacun des éléments de détection de rayonnement à partir desquels les données d'image contenant un défaut linéaire ont été lues.

5. Système de capture d'images de rayonnement selon l'une quelconque des revendications 1, 2 et 3, comprenant en outre un générateur de rayonnement irradiant l'appareil de capture d'images de rayonnement ;

dans lequel, lorsque le début de rayonnement est détecté sur la base de la valeur calculée par le procédé de calcul pour laquelle l'heure d'un début de rayonnement effectif à partir du générateur de rayonnement sur le dispositif de capture d'images radiographiques est antérieure à une détection du début de rayonnement par le dispositif de capture d'images radiographiques, l'appareil de traitement d'images identifie une plage des données d'image contenant un défaut linéaire en analysant un profil des données d'image le long d'une extension d'une ligne d'acheminement de signaux pour laquelle les données d'image ont été lues, et récupère les données d'image de la plage identifiée.

6. Système de capture d'images de rayonnement selon la revendication 5, dans lequel l'appareil de traitement d'images stocke des informations d'une relation entre un nombre de lignes de balayage, depuis une première ligne de balayage à partir de laquelle le défaut commence à apparaître jusqu'à une dernière ligne de balayage incluant le défaut à récupérer parmi chaque ligne de balayage de l'appareil de capture d'images de rayonnement correspondant à la plage des données d'image contenant le défaut, et un coefficient à multiplier par chacune des données d'image ayant été lues à partir de chacun des éléments de détection de rayonnement connectés à chacune des lignes de balayage respectives du défaut à récupérer ;

dans lequel l'appareil identifie la plage des données d'image contenant le défaut en analysant le profil des données d'image le long de l'extension de la ligne d'acheminement de signaux de l'appareil de capture d'images de rayonnement, et identifie la première ligne de balayage à partir de laquelle le défaut commence à apparaître ; et

dans lequel l'appareil récupère chacune des données d'image pour chaque ligne de balayage, de la première ligne de balayage à la dernière ligne de balayage, en multipliant chacune des données d'image dans la plage identifiée par le coefficient affecté à la ligne de balayage connectée à l'élément de détection de rayonnement à partir duquel les données d'image ont été lues, en faisant référence aux informations de la relation entre le nombre de lignes de balayage.

7. Système de capture d'images de rayonnement selon la revendication 1, 2 ou 3, comprenant en outre un générateur de rayonnement irradiant l'appareil de capture d'images de rayonnement ;

dans lequel, lorsque le début de rayonnement est détecté sur la base de la valeur calculée par le procédé de calcul pour laquelle l'heure d'un début de rayonnement effectif à partir du générateur de rayonnement sur le dispositif de capture d'images radiographiques est antérieure une détection du début de rayonnement par le dispositif de capture d'images radiographiques, l'appareil de traitement d'images identifie une plage des données d'image contenant un défaut linéaire, en calculant une valeur moyenne pour les données d'image le long de l'extension de la ligne de balayage pour chacune des lignes de balayage de l'appareil de capture d'images de rayonnement, et en analysant un profil de la valeur moyenne le long de l'extension de la ligne d'acheminement de signaux de l'appareil de capture d'images de rayonnement, et récupère les données d'image de la plage identifiée.

# FIG. 1

EP 2 493 176 B1

FIG. 2

# FIG. 3

# FIG. 4

# FIG. 5

FIG. 6

# FIG. 7

# FIG. 8

EP 2 493 176 B1

# FIG. 9

ELECTRIC
CHARGE
RESETTING
SWITCH 18c

ON

OFF

TFT8(Ln)

ON

OFF

# FIG. 10

ELECTRIC
CHARGE
RESETTING
SWITCH 18c

ON

OFF

PULSE
SIGNAL Sp

Sp1          Sp2

TFT8(Ln)

ON

OFF

# FIG. 11

# FIG. 12

# FIG. 13

# FIG. 14

ELECTRIC
CHARGE
RESETTING
SWITCH 18c

ON

OFF

PULSE
SIGNAL Sp

Sp1    Sp2

TFT8(Ln)

ON

OFF

# FIG. 15

EP 2 493 176 B1

# FIG. 16

ELECTRIC CHARGE RESETTING SWITCH 18c: ON / OFF

PULSE SIGNAL Sp

T

TFT8(L1): ON / OFF

Tac

τ

TFT8(L2): ON / OFF

TFT8(L3): ON / OFF

TFT8(L4): ON / OFF

TFT8(L5): ON / OFF

TFT8(Lx): ON / OFF

START OF IRRADIATION

TERMINATION OF IRRADIATION

R L R L R L R L | ELECTRIC CHARGE ACCUMULATED | IMAGE DATA D READ-OUT PROCESSING

EP 2 493 176 B1

# FIG. 17

# FIG. 18

EP 2 493 176 B1

# FIG. 19

ELECTRIC CHARGE RESETTING SWITCH 18c

ON

OFF

PULSE SIGNAL Sp

Sp1

Sp2

ΔT

TFT8(Ln)

ON

OFF

FIG. 20

IMAGE DATA d READ-OUT PROCESSING

START OF IRRADIATION

DETECTION

ELECTRIC CHARGE ACCUMULATED

IMAGE DATA D READ-OUT PROCESSING

EP 2 493 176 B1

# FIG. 21

ELECTRIC CHARGE RESETTING SWITCH 18c
ON / OFF

PULSE SIGNAL Sp

TFT8(L1) ON / OFF

TFT8(L2) ON / OFF

TFT8(L3) ON / OFF

TFT8(L4) ON / OFF

TFT8(L5) ON / OFF

TFT8(Lx) ON / OFF

START OF IRRADIATION

TERMINATION OF IRRADIATION

ELECTRIC CHARGE ACCUMULATED

IMAGE DATA D READ-OUT PROCESSING

EP 2 493 176 B1

# FIG. 22

# FIG. 23

# FIG. 24

dleak_ave(z)

$\delta$

$\gamma$

0                               t

# FIG. 25

EP 2 493 176 B1

# FIG. 26

FIG. 27

# FIG. 28

# FIG. 29

# FIG. 30

# FIG. 31

# FIG. 32

# FIG. 33

D*ave(n)

n

m

n

D*(m,n)

# FIG. 34

FIG. 35A

$D^*(m,n)$

FIG. 35B

$D^*(m,N)$

$Ro(N)$

FIG. 35C

$Ro$

$D^*(m,n)$

## FIG. 36

## FIG. 37

# FIG. 38

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI91997 B
- JP 73144 A
- JP 2006058124 A
- JP HEI61994342099 B
- US 6307915 B
- WO 03100459 A
- US 7211803 B
- JP 2009219538 A